**Europäisches Patentamt**

**European Patent Office**

**Office européen des brevets**

(19)

(11) **EP 1 202 484 A1**

(12) **EUROPEAN PATENT APPLICATION**
published in accordance with Art. 158(3) EPC

(43) Date of publication:
**02.05.2002 Bulletin 2002/18**

(51) Int Cl.⁷: $H04J\ 13/04$, $H04Q\ 7/38$

(21) Application number: **01938636.6**

(86) International application number:
**PCT/JP01/05016**

(22) Date of filing: **13.06.2001**

(87) International publication number:
**WO 01/97422 (20.12.2001 Gazette 2001/51)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **13.06.2000 JP 2000177642**

(71) Applicant: **MATSUSHITA ELECTRIC INDUSTRIAL CO., LTD.**
**Kadoma-shi, Osaka 571-8501 (JP)**

(72) Inventors:
• **AIHARA, Koichi**
**Yokosuka-shi, Kanagawa 239-0841 (JP)**

• **SOMON, Junji**
**Kanazawa-shi, Ishikawa 920-0867 (JP)**
• **IMAIZUMI, Satoshi**
**Yokosuka-shi, Kanagawa 239-0831 (JP)**
• **MINAMIDA, Noriaki**
**Kanazawa-shi, Ishikawa 920-0348 (JP)**
• **SUZUKI, Hidetoshi**
**Yokosuka-shi, Kanagawa 239-0847 (JP)**

(74) Representative: **Grünecker, Kinkeldey, Stockmair & Schwanhäusser Anwaltssozietät**
**Maximilianstrasse 58**
**80538 München (DE)**

(54) **SYNCHRONIZATION CAPTURING APPARATUS AND SYNCHRONIZATION CAPTURING METHOD**

(57) A first-stage processing section 105 detects a plurality of slot timings corresponding to a plurality of correlation values equal to or greater than a threshold value, a second-stage processing section 110 detects scrambling code timing and a scrambling code group in accordance with one of the slot timings, a third-stage processing section 115 identifies a scrambling code in accordance with the scrambling code timing, and a controller 104 switches a switch 103 so that processing by the second-stage processing section 110 and processing by the third-stage processing section 115 are executed for a plurality of slot timings each time processing by the first-stage processing section 105 is executed once.

FIG.4

**Description**

Technical Field

The present invention relates to a synchronization acquisition apparatus and synchronization acquisition method for use in a CDMA mobile communication system.

Background Art

In a CDMA (Code Division Multiple Access) cellular system, a mobile station must perform a cell search when power is turned on and when cell switching (handover) associated with movement is carried out.

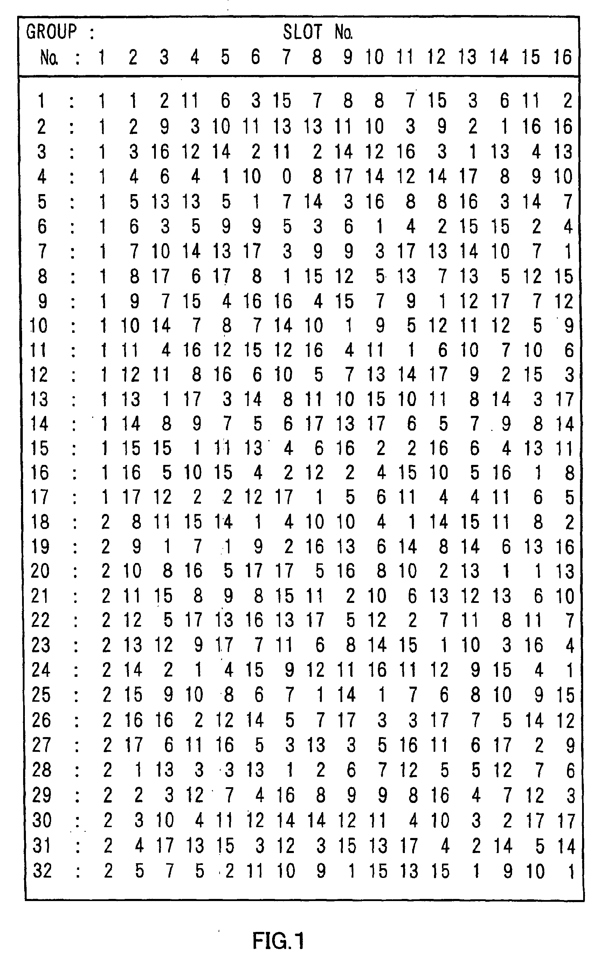

A three-stage cell search method is used as the synchronization acquisition method when performing a cell search. The synchronization acquisition method of this three-stage cell search method is described below using FIG. 1 through FIG.3.

With CDMA, the synchronization acquisition method is implemented in three stages: <first stage> slot timing detection, <second stage> scrambling code group identification and scrambling code timing (that is, frame timing) detection, and <third stage> scrambling code identification. A first search code that is a short-period code common to all base stations is used in the first stage, and a second search code that is a short-period code is used in the second stage. This second search code is distributed in a different pattern (a distribution pattern of a second search code number multiplied by one symbol of each slot) for each group containing a plurality of scrambling codes that are long-period codes (see FIG.1).

<First stage> Slot timing detection

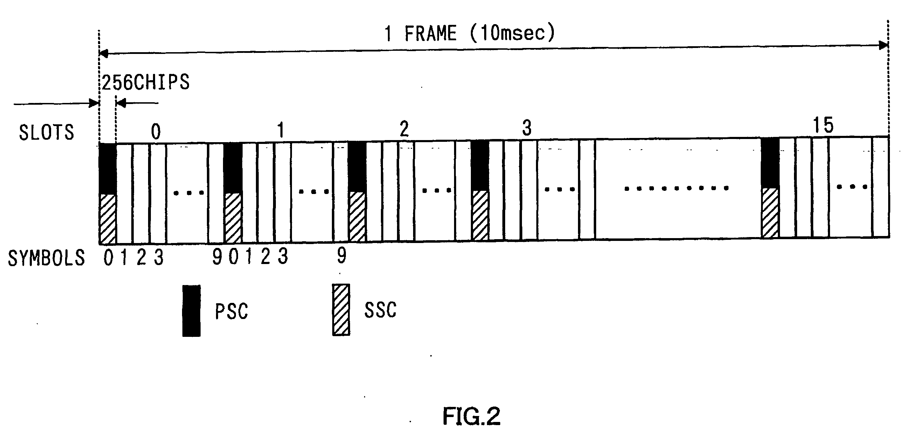

In CDMA, a first synchronization channel (PSC: Primary Search Channel) and second synchronization channel (SSC: Secondary Search Channel) are normally provided as synchronization channels, as shown in FIG.2. Here, slot timing is detected using the PSC. In the PSC, a specific symbol (here, the first symbol) in a slot is spread with only the first search code common to all base stations. Slot timing is detected using this first search code.

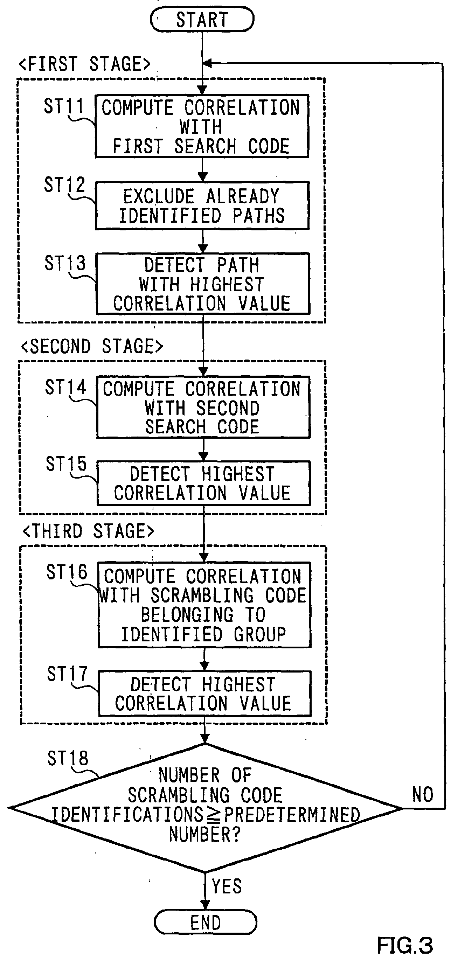

To be specific, slot timing detection is performed by means of the process shown in <First stage> in FIG.3. In ST11, a correlation value between data of one symbol and the first search code is calculated. Then, this correlation value calculation is performed throughout one slot, and a delay profile for one slot is created. In order to increase the slot timing detection precision, delay profiles of a plurality of slots are normally averaged.

The process shown in FIG.3 is a process for identifying scrambling codes of a plurality of paths, and therefore in ST12, paths corresponding to already identified scrambling codes are excluded. That is to say, correlation values corresponding to already detected scrambling code timings are excluded from the delay profile created in ST11.

In ST13, the path for which the correlation value is highest in the delay profile is detected. That is, the correlation value peak is detected, and the timing of that peak is detected as the slot timing.

<Second stage> Scrambling code group identification and scrambling code timing detection

Here, scrambling code group identification and scrambling code timing detection are carried out using the SSC. In the SSC, a specific symbol (here, the first symbol) in all the slots within a frame is spread with a second search code. A different second search code is used for each slot within a frame. The arrangement of search codes within a frame differs for each group into which scrambling codes that are long-period codes are classified. The total number of these groups is 32, as shown in FIG. 1. Normally, 17 kinds of second search code are provided. A scrambling code group (line in FIG.1) is identified using this second search code, and the start of a frame-that is, the scrambling code timing-is detected.

To be specific, scrambling code group identification and scrambling code timing detection are performed by means of the process shown in <Second stage> in FIG.3. In ST14, correlation processing is performed between a specific symbol (here, the first symbol) of a received slot and a second search code based on the slot timing detected in the first stage, according to the second search code arrangement table shown in FIG.1. By this means, correlation values are calculated for each of slots 0 through 15 for each group (for each line of the arrangement table).

Then the second search code arrangement shown in FIG.1 is shifted by one slot, and correlation processing is again performed between a specific symbol of the next slot received and a second search code based on the slot timing detected in the first stage, according to the arrangement table as it is after this one-slot shift has been made. At this time, the correlation values corresponding to slots 0 through 15 are averaged sequentially in order to increase the scrambling code group identification precision and scrambling code timing detection precision. Averaging processing is performed for the predetermined number of slots, shifting the second search code arrangement shown in FIG.

1 by one slot at a time.

In ST15, the scrambling code group and scrambling code timing (that is, the start of a frame) are detected from the maximum value of the averaged correlation values.

<Third stage> Scrambling code identification

Here, one scrambling code is identified from 16 scrambling code candidates determined from the scrambling code group identified in the second stage. To be specific, scrambling code identification is performed by means of the process shown in <Third stage> in FIG.3.

In ST16, a correlation value between receive data and a scrambling code is calculated in accordance with the detected scrambling code timing. This processing is performed for the 16 scrambling codes belonging to the identified scrambling code group. In order to increase the precision of scrambling code timing detection, correlation values for a plurality of symbols are averaged.

In ST17, the item with the highest correlation value among the correlation results is identified as the scrambling code.

When first-stage through third-stage processing is completed and one scrambling code has been identified, it is determined in ST18 whether or not a predetermined number of scrambling codes have been identified. If the predetermined number of scrambling codes have been identified, processing is terminated; if the number of scrambling code identifications has not reached the predetermined number, the processing flow returns to the first stage.

However, with the above-described conventional synchronization acquisition method, if the number of identified scrambling codes has not reached the predetermined number, the processing flow returns to the first stage, and the processing in the first through third stages is carried out again. That is to say, first-stage processing is performed each time in order to identify a single scrambling code, and there is thus a problem in that a long time is required in order to identify scrambling codes of a plurality of paths.

Disclosure of Invention

It is an object of the present invention to provide a synchronization acquisition apparatus and synchronization acquisition method that enable scrambling codes of a plurality of paths to be identified efficiently and make it possible for faster cell searches to be performed than heretofore.

In order to achieve the above object, in the present invention scrambling codes of a plurality of paths are identified by detecting a plurality of slot timings in a first stage and performing second-stage and third-stage processing repeatedly based on those detected slot timings. That is to say, in the present invention second-stage and third-stage processing is executed a plurality of times for one execution of first-stage processing.

Brief Description of Drawings

FIG.1 is a drawing showing an example of the arrangement of second search codes corresponding to scrambling code groups;

FIG.2 is a schematic diagram showing an example of frame configuration;

FIG.3 is a flowchart for explaining the operation of a conventional synchronization acquisition apparatus;

FIG.4 is a main block diagram showing a schematic configuration of a synchronization acquisition apparatus according to Embodiment 1 of the present invention;

FIG.5 is a flowchart for explaining the operation of a synchronization acquisition apparatus according to Embodiment 1 of the present invention;

FIG.6 is a main block diagram showing a schematic configuration of a synchronization acquisition apparatus according to Embodiment 2 of the present invention;

FIG.7 is a flowchart for explaining the operation of a synchronization acquisition apparatus according to Embodiment 2 of the present invention;

FIG.8 is a main block diagram showing the configuration of the second-stage processing section of a synchronization acquisition apparatus according to Embodiment 3 of the present invention;

FIG.9 is a main block diagram showing the configuration of the third-stage processing section of a synchronization acquisition apparatus according to Embodiment 3 of the present invention;

FIG.10 is a main block diagram showing a schematic configuration of the second-stage processing section of a synchronization acquisition apparatus according to Embodiment 4 of the present invention;

FIG.11 is a main block diagram showing a schematic configuration of the second-stage processing section of a synchronization acquisition apparatus according to Embodiment 5 of the present invention;

FIG.12 is a flowchart for explaining the operation of a synchronization acquisition apparatus according to Embodiment 5 of the present invention;

FIG.13 is a drawing showing an example of a delay profile for explaining the operation of a synchronization acquisition apparatus according to Embodiment 5 of the present invention;

FIG.14 is a drawing showing an example of a timing table created by a synchronization acquisition apparatus according to Embodiment 5 of the present invention;

FIG.15 is a drawing showing an example of a delay profile for explaining the operation of a synchronization acquisition apparatus according to Embodiment 6 of the present invention;

FIG.16 is a drawing showing an example of a timing table created by a synchronization acquisition apparatus according to Embodiment 6 of the present invention;

FIG.17 is a main block diagram showing a schematic configuration of the second-stage processing section of a synchronization acquisition apparatus according to Embodiment 7 of the present invention;

FIG.18 is a main block diagram showing a schematic configuration of the second-stage processing section of a synchronization acquisition apparatus according to Embodiment 8 of the present invention;

FIG.19 is a main block diagram showing a schematic configuration of a synchronization acquisition apparatus according to Embodiment 9 of the present invention; and

FIG.20 is a flowchart for explaining the operation of a synchronization acquisition apparatus according to Embodiment 9 of the present invention.

Best Mode for Carrying out the Invention

With reference now to the accompanying drawings, embodiments of the present invention will be explained in detail below.

(Embodiment 1)

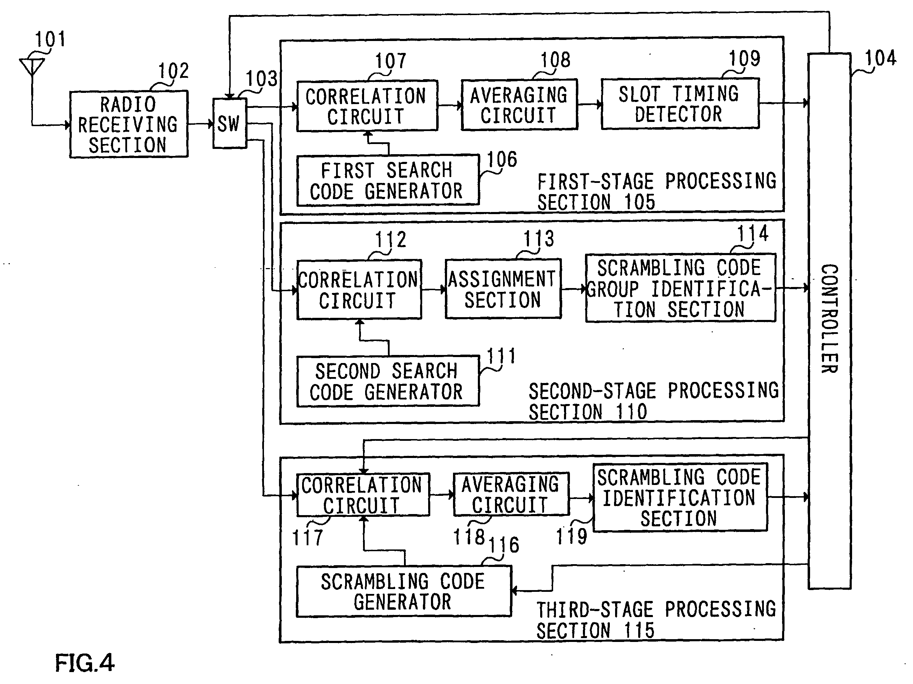

FIG.4 is a main block diagram showing a schematic configuration of a synchronization acquisition apparatus according to Embodiment 1 of the present invention. In FIG.4, a radio receiving section 102 executes predetermined radio processing (down-conversion, A/D conversion, etc.) on a signal received via an antenna 101. By switching a switch 103, a controller 104 switches and inputs receive data as appropriate to a first-stage processing section 105, second-stage processing section 110, or third-stage processing section 115.

In the first-stage processing section 105, a first search code generator 106 generates a first search code used in common for all base stations. A correlation circuit 107 calculates a correlation value between receive data and the first search code. An averaging circuit 108 averages correlation values for a plurality of slots. A slot timing detector 109 detects the maximum value of averaged correlation values.

In the second-stage processing section 110, a second search code generator 111 outputs second search codes 1 through 17. A correlation circuit 112 calculates correlation values between a received slot and second search codes 1 through 17. An assignment section 113 sequentially averages correlation values for each of slots 0 through 15 while assigning correlation values calculated by the correlation circuit 112 to slots 0 through 15 in accordance with the second search code arrangement table shown in FIG.1. A scrambling code group identification section 114 performs scrambling code group identification and scrambling code timing detection.

In the third-stage processing section 115, a scrambling code generator 116 generates the 16 scrambling codes belonging to an identified scrambling code group. A correlation circuit 117 calculates a correlation value between receive data and a scrambling code.

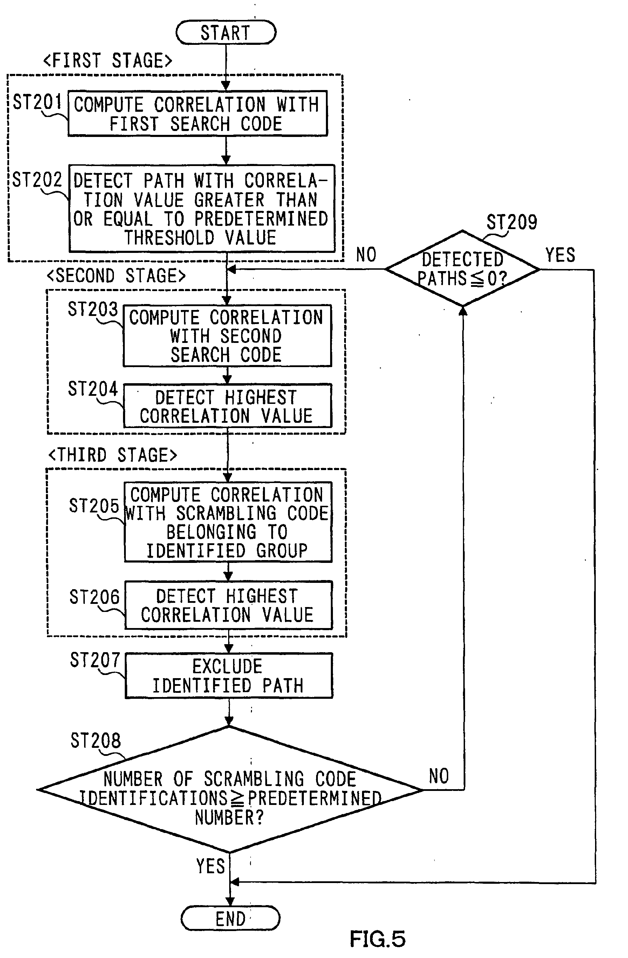

Next, the operation of a synchronization acquisition apparatus with the above configuration will be described. FIG. 5 is a flowchart for explaining the operation of a synchronization acquisition apparatus according to Embodiment 1 of the present invention.

As shown in FIG 5, a synchronization acquisition apparatus according to this embodiment carries out a cell search in three stages in the conventional way: <first stage> slot timing detection, <second stage> scrambling code group identification and scrambling code timing (that is, frame timing) detection, and <third stage> scrambling code identification. However, a synchronization acquisition apparatus according to this embodiment differs from a conventional synchronization acquisition apparatus in that a plurality of slot timings are selected in the first stage, and the second stage and third stage are executed repeatedly based on those selected slot timings.

<First stage> Slot timing detection

Slot timing detection is performed by means of the kind of process shown in <First stage> in FIG.5. In the first stage, also, the switch 103 is switched by the controller 104 so that the radio receiving section 102 and the correlation circuit 107 in the first-stage processing section 105 are connected.

First, in ST201, a correlation value between receive data of one symbol and a first search code output by the first search code generator 106 is calculated by the correlation circuit 107. Then, this correlation value calculation is performed throughout one slot, and a delay profile for one slot is created. Created delay profiles are averaged for a plurality of slots by the averaging circuit 108.

In ST202, the slot timing detector 109 detects from averaged delay profiles a plurality of paths whose correlation values are equal to or greater than a predetermined threshold value. That is to say, the slot timing detector 109 detects timings corresponding to a plurality of correlation values equal to or greater than a predetermined threshold value as slot timings.

A signal indicating the detected plurality of slot timings is then output to the controller 104. At this time, the switch 103 is switched by the controller 104 so that the radio receiving section 102 and the correlation circuit 112 in the second-stage processing section 110 are connected.

<Second stage> Scrambling code group identification and scrambling code timing detection

Scrambling code group identification and scrambling code timing detection are performed by means of the process shown in <Second stage> in FIG.5.

In ST203, the controller 104 first selects a slot timing from the plurality of slot timings determined in ST202, and outputs a signal indicating that selected slot timing to the correlation circuit 112. The controller 104 may, for example, make selections one by one in high-to-low correlation value order from the plurality of slot timings determined in ST202.

In the correlation circuit 112, correlation processing is performed between a specific symbol of sequentially received slots and a second search code output by the second search code generator 111 based on the slot timing indicated by the controller 104, and correlation values are calculated. By this means, 16 correlation values corresponding to slots 0 through 15 are output to the assignment section 113, one each time a slot is received.

Correlation values calculated by the correlation circuit 112 are assigned by the assignment section 113 to slots 0 through 15 in accordance with the second search code arrangement table shown in FIG.1. The assignment section 113 also assigns correlation values to slots 0 through 15 while shifting the second search code arrangement shown in FIG.1 one slot at a time each time a correlation value is output from the correlation circuit 112 (that is, each time a slot is received), and sequentially averages the correlation values for each of slots 0 through 15. The averaged correlation values are stored in memory within the assignment section 113, and updated sequentially. Averaging processing is performed for the predetermined number of slots, shifting the second search code arrangement shown in FIG.1 by one slot at a time.

In ST204, the scrambling code group identification section 114 performs scrambling code group identification and scrambling code timing (that is, start of frame) detection from the maximum value of the averaged correlation values.

A signal indicating the identified scrambling code group and the detected scrambling code timing is then output to the controller 104. At this time, the switch 103 is switched by the controller 104 so that the radio receiving section 102 and the correlation circuit 117 in the third-stage processing section 115 are connected.

<Third stage> Scrambling code identification

Scrambling code identification is performed by means of the process shown in <Third stage> in FIG.5.

In ST205, the controller 104 first outputs a signal indicating the scrambling code timing detected in ST204 to the correlation circuit 117, and outputs a signal indicating the scrambling code group identified in ST204 to the scrambling code generator 116.

In the correlation circuit 117, a correlation value between receive data and a scrambling code is calculated in accordance with the scrambling code timing indicated by the controller 104. In the correlation circuit 117, this processing is performed for the 16 scrambling codes belonging to the scrambling code group identified in ST204. The calculated correlation values are averaged a plurality of times for each scrambling code by an averaging circuit 118.

In ST206, a scrambling code identification section 119 identifies the scrambling code with the highest correlation value among the averaged correlation values as the scrambling code corresponding to the first path, and outputs a signal reporting that this has been identified to the controller 104.

When first-stage through third-stage processing is completed and the scrambling code corresponding to the first path has been identified, in ST207 the controller 104 excludes the slot timing corresponding to the first path from the plurality of slot timings detected in ST202. For example, if five slot timings have been detected in ST202, the remaining number of slot timings is taken to be four in ST207.

In ST208, it is determined by the controller 104 whether or not the predetermined number of scrambling codes have been identified. If the predetermined number of scrambling codes have been identified, cell search processing is terminated.

If the number of scrambling code identifications has not reached the predetermined number, it is determined by the controller 104 in ST209 whether or not there are no more of the slot timings detected in ST202. That is to say, it is determined whether or not the result after paths detected in ST202 have been sequentially excluded in ST207 is 0.

If the result of the determination in ST209 is that paths detected in ST202 have not been exhausted, in ST203 the controller 104 outputs a signal indicating one slot timing from among the remaining slot timings (here, four) to correlation circuit 112. Thereafter, second-stage and third-stage processing is repeated until the number of paths detected in ST202 is 0. That is to say, for one execution of first-stage processing, second-stage and third-stage processing is executed a plurality of times until the number of detected paths is 0.

If the result of the determination in ST209 is that there are no more paths detected in ST202, cell search processing is terminated.

Thus, according to a synchronization acquisition apparatus and synchronization acquisition method of this embodiment, a plurality of slot timings are detected in a first stage, and second-stage and third-stage processing is performed repeatedly based on these detected slot timings, enabling a plurality of scrambling codes to be identified for one execution of first-stage processing. Therefore, according to a synchronization acquisition apparatus and synchronization acquisition method of this embodiment, when a plurality of cell searches need to be carried out, cell searches can be performed at higher speed than heretofore.

(Embodiment 2)

If cell searching is performed as shown in Embodiment 1 when receive data frequency error is comparatively large, it is possible that the plurality of slot timings detected in the first stage will gradually diverge from the current correct slot timings while second-stage and third-stage processing is being executed, and that the precision of scrambling code identification and the precision of scrambling code timing detection will fall.

For example, if frequency error is 5 ppm, variation of approximately 50 nsec will occur over a 10 msec period. That is to say, in a 10 msec period, variation of approximately 1/5 chip will occur in 1 chip (3.84 MHz).

Thus, in a synchronization acquisition apparatus according to this embodiment, when receive data frequency error is comparatively large slot timing detection is performed anew each time second-stage and third-stage processing is executed (that is, cell searching is performed using the conventional method), and when receive data frequency error is comparatively small second-stage and third-stage processing is executed repeatedly for a plurality of slot timings detected in the first stage (that is, cell searching is performed using the method according to Embodiment 1).

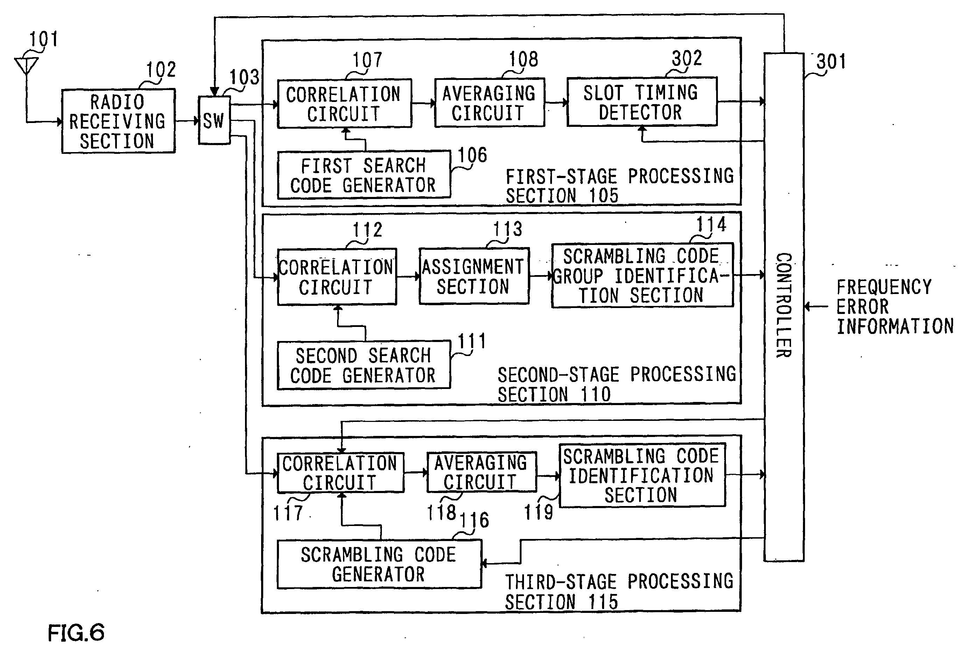

FIG.6 is a main block diagram showing a schematic configuration of a synchronization acquisition apparatus according to Embodiment 2 of the present invention. Parts in FIG.6 identical to those in Embodiment 1 are assigned the same codes as in Embodiment 1 and their detailed explanations are omitted.

In FIG.6, when receive data frequency error is equal to or greater than a predetermined threshold value, a controller 301 switches a switch 103 so that second-stage and third-stage processing is executed once for one execution of first-stage processing.

When receive data frequency error is less than the predetermined threshold value, the controller 301 switches the switch 103 so that second-stage and third-stage processing is executed a plurality of times for one execution of first-stage processing. That is to say, when receive data frequency error is less than the predetermined threshold value, a synchronization acquisition apparatus according to this embodiment operates in the same way as a synchronization acquisition apparatus according to Embodiment 1.

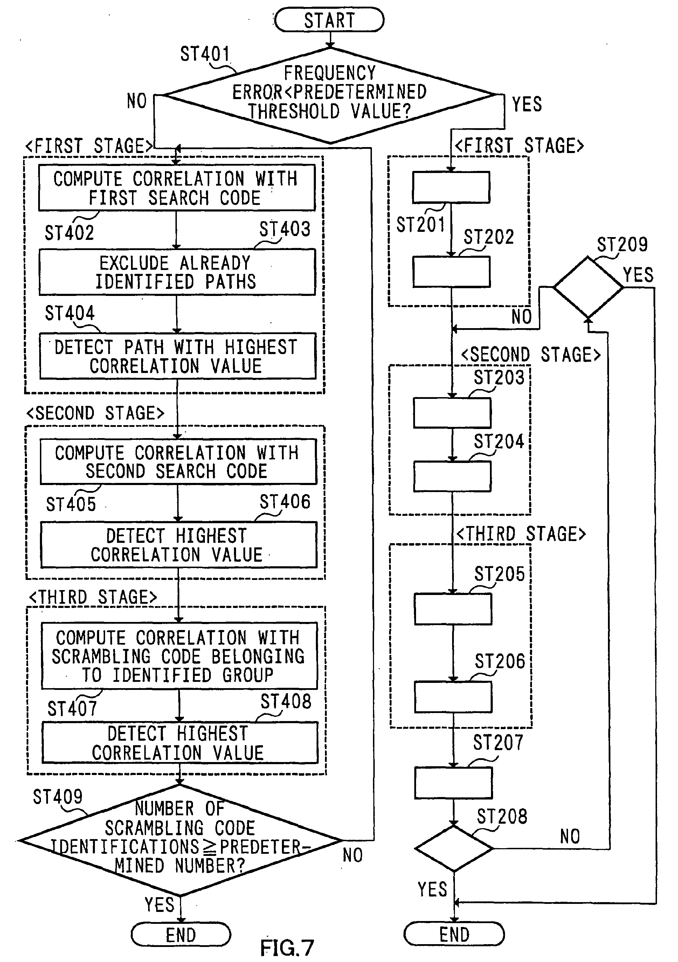

Thus, in the flowchart for explaining the operation of a synchronization acquisition apparatus according to this embodiment shown in FIG.7, the same processing is performed in ST201 through ST209 as in ST201 through ST209 in FIG.5, and therefore the same codes are assigned and a detailed explanation of this processing is omitted.

Also, in the operation flowchart shown in FIG.7, the same processing is performed in ST402 as in ST201, and in ST405 through ST408 as in ST203 through ST206, and therefore explanations of ST402 and ST405 through ST408 are omitted.

In the operation flowchart shown in FIG.7, in ST401 a frequency error value obtained from input frequency error information is compared with a predetermined threshold value by the controller 301. If the frequency error is equal to or greater than the predetermined threshold value the processing flow proceeds to ST402, and if the frequency error is less than the predetermined threshold value the processing flow proceeds to ST201.

In ST403, a signal indicating paths corresponding to already identified scrambling codes is output from the controller 301 to a slot timing detector 302. The slot timing detector 302 then excludes correlation values corresponding to already detected scrambling code timings from the delay profile created in ST402.

In ST404, the slot timing detector 302 selects one path for which the correlation value is highest in the delay profile. That is to say, the slot timing detector 302 detects the correlation value peak, and detects the timing of that peak as the slot timing.

When first-stage through third-stage processing is completed and one scrambling code has been identified, it is determined by the controller 301 in ST409 whether or not a predetermined number of scrambling codes have been identified. If the predetermined number of scrambling codes have been identified, processing is terminated; if the number of scrambling code identifications has not reached the predetermined number, the controller 301 switches the switch 103 so that the radio receiving section 102 and the correlation circuit 107 in the first-stage processing section 105 are connected.

After identification of one scrambling code and detection of one scrambling code timing are completed, it is also possible to operate a frequency tracking circuit, suspend cell search processing until frequency error falls below a predetermined threshold value, and restart cell search processing after frequency error has fallen below the predetermined threshold value.

Thus, according to a synchronization acquisition apparatus of this embodiment, when receive data frequency error is comparatively large slot timing detection is performed anew each time second-stage and third-stage processing is executed (that is, cell searching is performed using the conventional method), and when receive data frequency error is comparatively small second-stage and third-stage processing is executed repeatedly for a plurality of slot timings detected in the first stage (that is, cell searching is performed using the method according to Embodiment 1), so that cell searching can be performed using the optimum method according to the size of frequency error. Thus, according to a synchronization acquisition apparatus and synchronization acquisition method of this embodiment, it is possible to perform scrambling code identification with high precision even when frequency error is comparatively large, and it is also possible to perform identification of a plurality of scrambling codes at high speed and with high precision when frequency error is comparatively small.

(Embodiment 3)

As described in Embodiment 2, if cell searching is performed as shown in Embodiment 1 when receive data frequency error is comparatively large, it is possible that the plurality of slot timings detected in the first stage will gradually diverge from the current correct slot timings while second-stage and third-stage processing is being executed, and that the precision of scrambling code identification and the precision of scrambling code timing detection will fall.

Thus, a synchronization acquisition apparatus according to this embodiment differs from a synchronization acquisition apparatus according to Embodiment 1 in that correlation values with a second search code are calculated not only for slot timings detected in the first stage but also for timings lagging those slot timings by a predetermined number of chips and timings in advance of those timings by a predetermined number of chips.

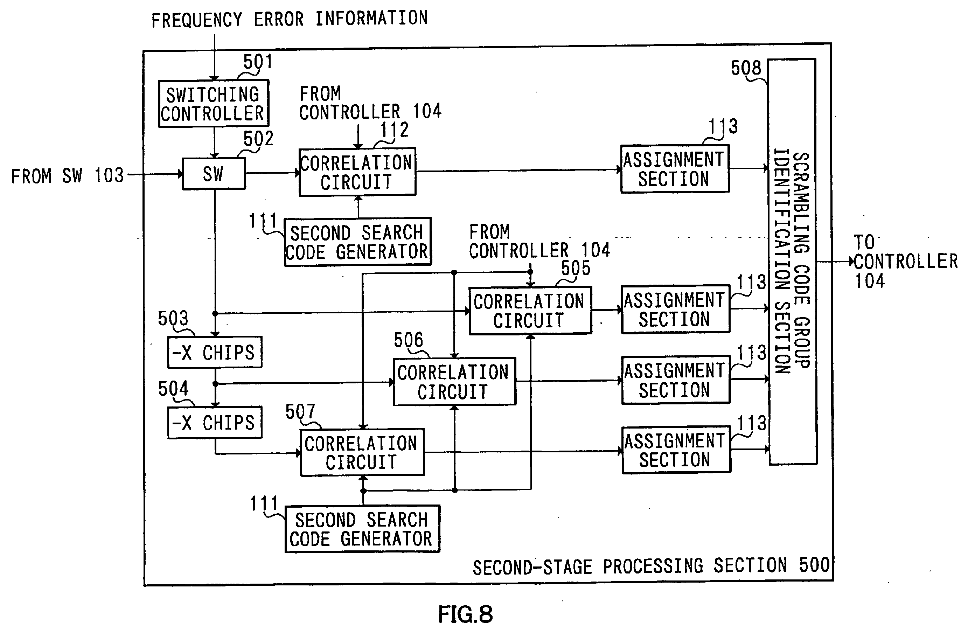

FIG.8 is a main block diagram showing the configuration of the second-stage processing section of a synchronization acquisition apparatus according to Embodiment 3 of the present invention. Parts in FIG.8 identical to those in Embodiment 1 are assigned the same codes as in Embodiment 1 and their detailed explanations are omitted.

In a second-stage processing section 500, a switching controller 501 switches a switch 502 so that switch 103 and correlation circuit 112 are connected when receive data frequency error is less than a predetermined threshold value, and switch 103 and a delayer 503 are connected when receive data frequency error is equal to or greater than the predetermined threshold value.

That is to say, when frequency error is less than the predetermined threshold value, receive data is input to correlation circuit 112 and second-stage processing is executed in the same way as in Embodiment 1.

On the other hand, when frequency error is equal to or greater than the predetermined threshold value, receive data is input to delayer 503 and delayed by a predetermined number of chips (here, X chips). Also, receive data is further delayed by a predetermined number of chips (here, X chips ) by delayer 504. Thus, data input to correlation circuit 505 is not delayed, data input to correlation circuit 506 is delayed by -X chips compared with data input to correlation circuit 505, and data input to correlation circuit 507 is delayed by -2X chips compared with data input to correlation circuit 505.

Correlation circuit 506 aligns a slot timing indicated by the controller 104 with the start of each slot of data delayed by -X chips, and calculates a correlation value with a second search code. In this way, data delayed by -X chips is made the slot timing reference, and therefore correlation circuit 505 calculates a correlation value with a second search code for a timing delayed by X chips from the slot timing indicated by the controller 104, and correlation circuit 507 calculates a correlation value with asecond search code for a timing advanced by X chips from the slot timing indicated by the controller 104.

A scrambling code group identification section 508 then performs scrambling code group identification and scrambling code timing detection from the maximum value of averaged values. At this time, the scrambling code group identification section 508 performs scrambling code group identification and scrambling code timing detection based on an averaged correlation value output from one of three assignment sections 113. A signal indicating the identified scrambling code group and detected scrambling code timing is then output to the controller 104.

By executing second-stage processing in this way, it is possible for scrambling code group identification and scrambling code timing detection to be performed with high precision even when receive data frequency error is comparatively large.

In the third-stage processing section, it is possible to calculate correlation values with scrambling codes not only for scrambling code timing detected in the second stage, but also for timing delayed by a predetermined number of chips from that scrambling code timing, and timing a predetermined number of chips in advance of that scrambling code timing.

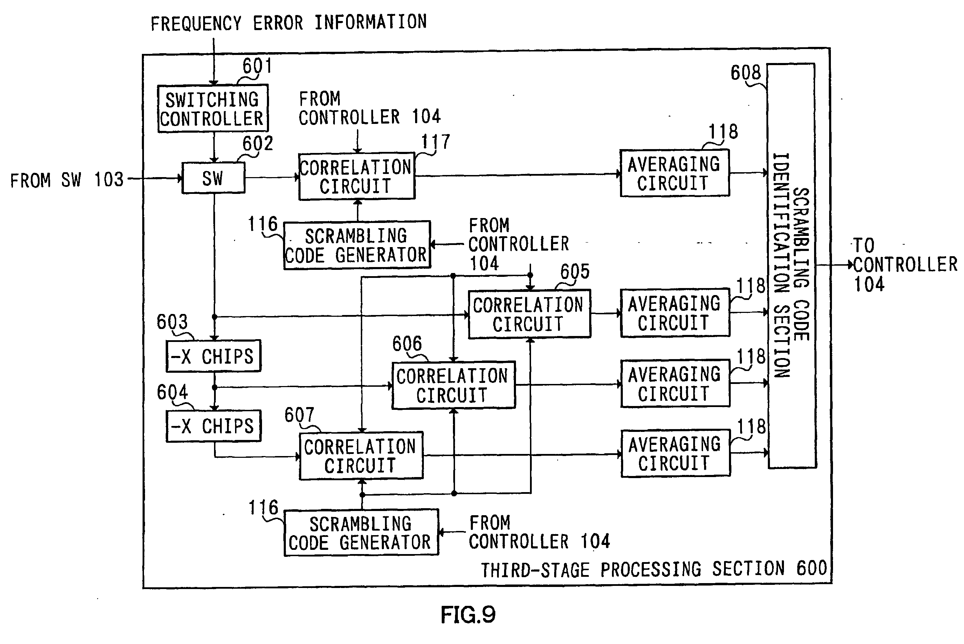

FIG.9 is a main block diagram showing the configuration of the third-stage processing section of a synchronization acquisition apparatus according to Embodiment 3 of the present invention. Parts in FIG.9 identical to those in Embodiment 1 are assigned the same codes as in Embodiment 1 and their detailed explanations are omitted.

In a third-stage processing section 600, a switching controller 601 switches a switch 602 so that switch 103 and correlation circuit 117 are connected when receive data frequency error is less than a predetermined threshold value, and switch 103 and a delayer 603 are connected when receive data frequency error is equal to or greater than the predetermined threshold value.

That is to say, when frequency error is less than the predetermined threshold value, receive data is input to correlation circuit 117 and third-stage processing is executed in the same way as in Embodiment 1.

On the other hand, when frequency error is equal to or greater than the predetermined threshold value, receive data is input to delayer 603 and delayed by a predetermined number of chips (here, X chips). Also, receive data is further delayed by a predetermined number of chips (here, X chips ) by delayer 604. Thus, data input to correlation circuit 605 is not delayed, data input to correlation circuit 606 is delayed by -X chips compared with data input to correlation circuit 605, and data input to correlation circuit 607 is delayed by -2X chips compared with data input to correlation circuit 605.

Correlation circuit 606 aligns a scrambling code timing indicated by the controller 104 with the start of a frame of data delayed by -X chips, and calculates a correlation value with a scrambling code. In this way, data delayed by -X chips is made the scrambling code timing reference, and therefore correlation circuit 605 calculates a correlation value with a scrambling code for a timing delayed by X chips from the scrambling code timing indicated by the controller 104, and correlation circuit 607 calculates a correlation value with a scrambling code for a timing advanced by X chips from the scrambling code timing indicated by the controller 104.

A scrambling code identification section 608 then identifies the scrambling code with the highest correlation value from among correlation values averaged by averaging circuits 118 as the scrambling code corresponding to the path detected by the first-stage processing section 105, and outputs a signal indicating that this has been identified to the controller 104. At this time, a scrambling code identification section 608 identifies the scrambling code based on a correlation value output from one of the three averaging circuits 118.

By executing third-stage processing in this way, it is possible for scrambling code identification to be performed with high precision even when receive data frequency error is comparatively large.

Thus, according to a synchronization acquisition apparatus and synchronization acquisition method of this embodiment, it is possible to perform cell searching with high precision even when frequency error is comparatively large, since correlation values with scrambling codes are calculated not only for timing detected in each stage, but also for timing delayed by a predetermined number of chips from that timing, and timing a predetermined number of chips in advance of that timing.


(Embodiment 4)


When assignment sections are provided to handle slot timing detected in the first stage, timing delayed by a predetermined number of chips from that slot timing, and timing a predetermined number of chips in advance of that timing, as in Embodiment 3, three assignment sections are necessary, and therefore the amount of computation in second-stage processing increases, and so does the memory capacity for storing correlation values averaged in the second-stage processing section.

Thus, a synchronization acquisition apparatus according to this embodiment differs from a synchronization acquisition apparatus according to Embodiment 3 in that, in second-stage processing, a correlation value corresponding to slot timing detected in the first stage, a correlation value corresponding to timing delayed by a predetermined number of chips from that slot timing, and a correlation value corresponding to timing advanced by a predetermined number of chips, are added, and the resulting values are averaged sequentially for each of slots 0 through 15.

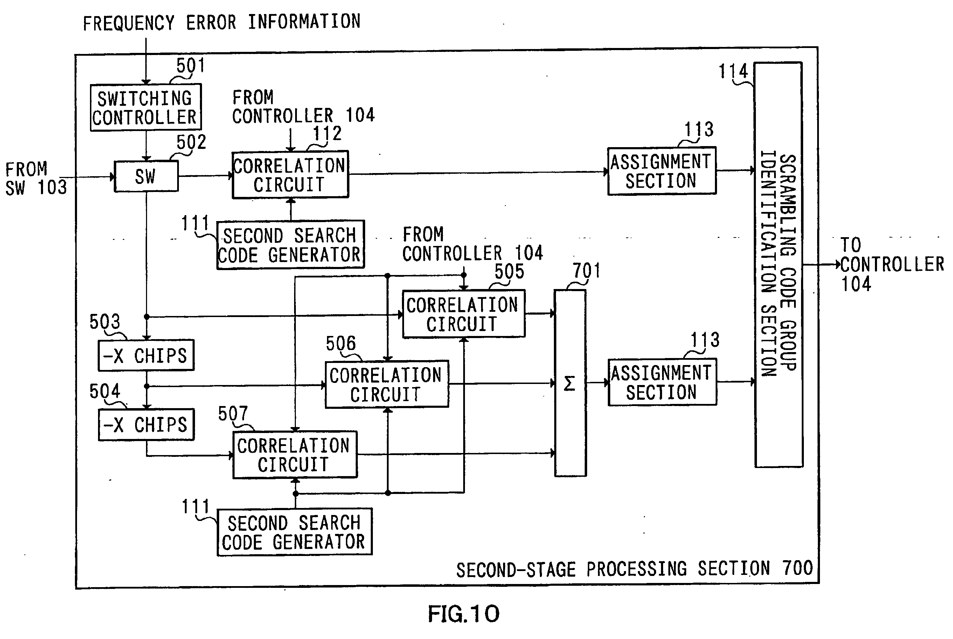

FIG.10 is a main block diagram showing a schematic configuration of the second-stage processing section of a synchronization acquisition apparatus according to Embodiment 4 of the present invention. Parts in FIG.10 identical to those in Embodiment 1 and Embodiment 3 are assigned the same codes as in Embodiment 1 and Embodiment 3, and their detailed explanations are omitted.

In a second-stage processing section 700, an adder 701 adds correlation values calculated by three correlation circuits 505 through 507, and outputs the resulting correlation value to an assignment section 113. The assignment section 113 assigns added correlation values to slots 0 through 15 and sequentially averages the correlation values for each of slots 0 through 15. The averaged correlation values are stored in memory within the assignment section 113, and updated sequentially.

According to a synchronization acquisition apparatus and synchronization acquisition method of this embodiment, a correlation value corresponding to slot timing detected in the first stage, a correlation value corresponding to timing delayed by a predetermined number of chips from that slot timing, and a correlation value corresponding to timing advanced by a predetermined number of chips, are added, and the resulting values are averaged sequentially for each of slots 0 through 15, so that the amount of computation in second-stage processing and the memory capacity for storing correlation values averaged in the second-stage processing section can be reduced (to one third of the respective amount and capacity in Embodiment 3).

In the third-stage processing section, it is possible to add a correlation value corresponding to scrambling code timing detected in the first stage, a correlation value corresponding to timing delayed by a predetermined number of chips from that scrambling code timing, and a correlation value corresponding to timing advanced by a predetermined number of chips, and to sequentially average the added correlation values. By so doing, noise components can be suppressed since scrambling code identification is performed using correlation values subjected to in-phase addition, and therefore identification precision can be further improved.

(Embodiment 5)

As shown in FIG.2, there is only one symbol (in the example in FIG.2, the first symbol) spread by a second search code (that is, an SCC) in one slot, and therefore correlation value averaging processing in the second stage can only be performed on a slot-by-slot basis. On the other hand, since the scrambling code period is the same as the frame period, correlation value averaging processing in the third stage can be performed on a symbol-by-symbol basis.

Thus, if precision equal to the precision of scrambling code identification in the third stage is to be obtained in scrambling code group identification and scrambling code timing detection in the second stage, a longer time is necessary for second-stage processing than for third-stage processing. To be specific, in the case of the frame configuration shown in FIG.2, to obtain, in second-stage identification and detection, the identification precision obtained using correlation values averaged for 20 symbols in the third stage, it is necessary to use correlation values averaged for two frames (verified by simulation). That is to say, second-stage processing requires approximately 16 times as much time as third-stage processing.

Thus, a synchronization acquisition apparatus according to this embodiment differs from a synchronization acquisition apparatus according to Embodiment 1 in that, after second-stage processing has been executed en bloc for slot timings in a predetermined range from among slot timings detected in the first stage, third-stage processing is executed repeatedly for a plurality of scrambling code groups identified in the second stage and a plurality of scrambling code timings detected in the second stage.

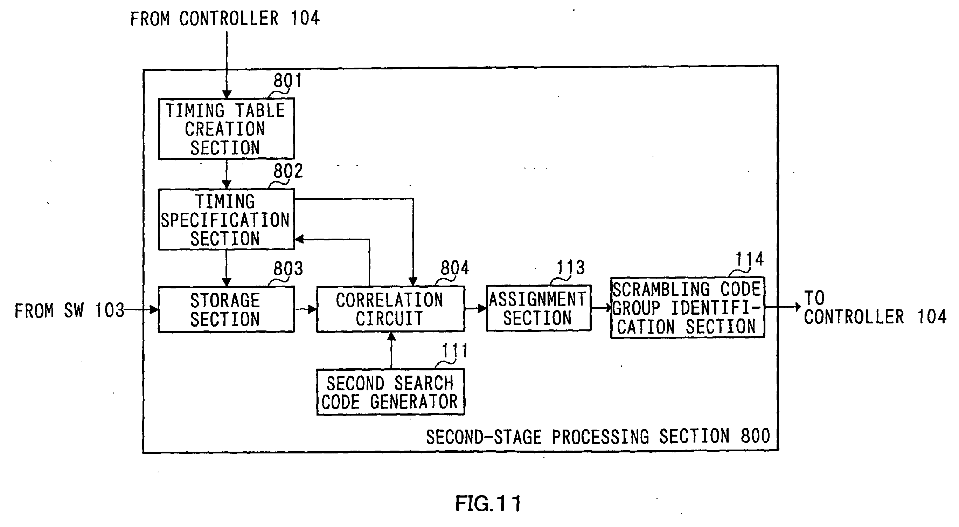

FIG.11 is a main block diagram showing a schematic configuration of the second-stage processing section of a synchronization acquisition apparatus according to Embodiment 5 of the present invention. Parts in FIG.11 identical to those in Embodiment 1 are assigned the same codes as in Embodiment 1 and their detailed explanations are omitted.

In a second-stage processing section 800, a timing table creation section 801 creates a table showing the correspondence between a plurality of slot timings detected by a first-stage processing section 105 and correlation values. A timing specification section 802 specifies slot timings for which second-stage processing is to be performed en bloc to a correlation circuit 804. A storage section 803 temporarily holds receive data for a predetermined time. The correlation circuit 804 calculates correlation values en bloc for a plurality of slot timings.

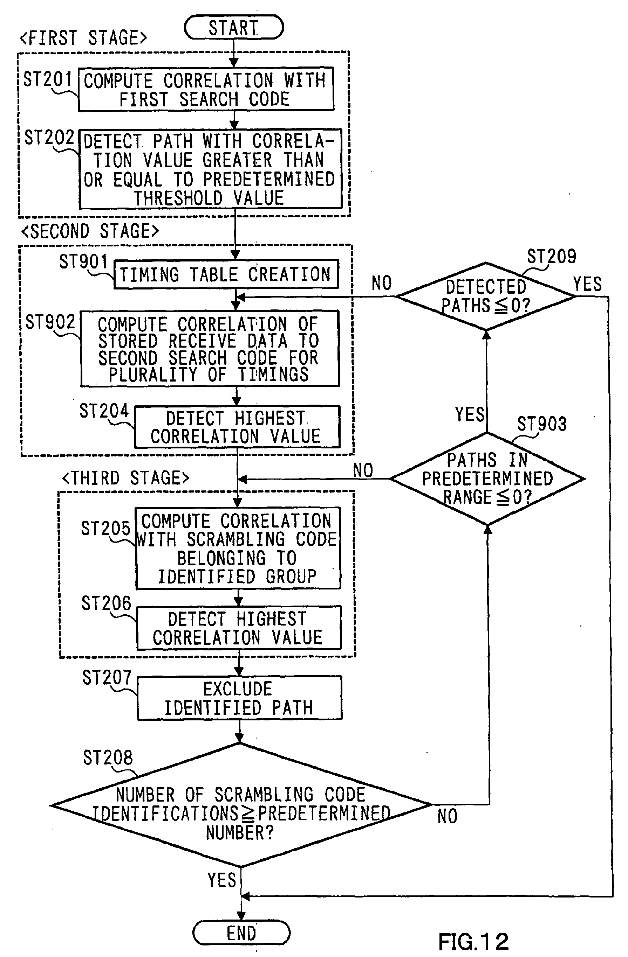

Next, the operation of a synchronization acquisition apparatus with the above configuration will be described. FIG.12 is a flowchart for explaining the operation of a synchronization acquisition apparatus according to Embodiment 5 of the present invention. Steps in FIG.12 in which the operation is identical to that in Embodiment 1 are assigned the same codes as in Embodiment 1 and their detailed explanations are omitted.

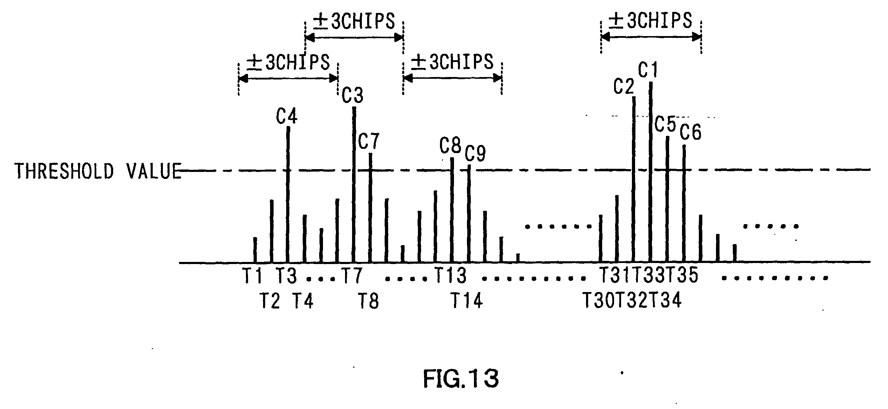

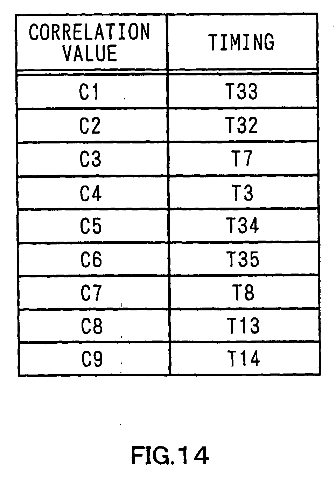

In ST901, the controller 104 first outputs to the timing table creation section 801 a signal indicating all slot timings equal to or greater than a predetermined threshold value. Then the timing table creation section 801 creates a table (hereinafter referred to as "timing table") showing the correspondence between the plurality of slot timings detected by the first-stage processing section 105 and correlation values. If, as shown in FIG.13, the correlation values equal to or greater than the predetermined threshold value in the first stage are C1 through C9, and the plurality of timings T3, T7, T8, T13, T14, T32, T33, T34, and T35 are detected as slot timings, the timing table creation section 801 creates a timing table such as that shown in FIG.14. That is to say, the timing table creation section 801 creates a timing table with correlation values arranged in high-to-low order.

Next, in ST902, the timing specification section 802 first refers to the timing table and selects the highest correlation value (that is, C1), and then selects timings within a predetermined time range (here, a ±3 chip time) centered on timing T33 corresponding to C1. Here, therefore, T32, T33, T34, and T35 are selected. Then the timing specification section 802 controls the storage section 803 so that receive data in a 1 symbol + 6 chip time range with timing T30 (that is, the timing 3 chips before timing T33 corresponding to C1) as the origin is held temporarily.

Next, the timing specification section 802 instructs the storage section 803 to output the temporarily held data to the correlation circuit 804, and also first outputs a signal indicating timing T32 to the correlation circuit 804.

The correlation circuit 804 first calculates the correlation value between data output from the storage section 803 and a second search code for timing T32. After the calculation, the correlation circuit 804 outputs the calculated correlation value to the assignment section 113 and also outputs a signal to the timing specification section 802 indicating that correlation computation for timing T32 has been completed.

The timing specification section 802 then instructs the storage section 803 to output to the correlation circuit 804 the same 1 symbol + 6 chip time data as used in the previous correlation value computation, and also outputs a signal indicating timing T33 to the correlation circuit 804.

The correlation circuit 804 then calculates the correlation value between data output from the storage section 803 and a second search code for timing T33. After the calculation, the correlation circuit 804 outputs the calculated correlation value to the assignment section 113 and also outputs a signal to the timing specification section 802 indicating that correlation computation for timing T33 has been completed.

In the second-stage processing section 800, correlation values for T34 and T35 are also calculated in this way for the same 1 symbol + 6 chip time data with timing T30 as the origin. Following this, the controller 104 outputs sequentially to the third-stage processing section 115 signals indicating the scrambling code group identified based on T32 through T35 and the scrambling code timing detected based on T32 through T35.

Then, in ST903, it is determined by the controller 104 whether or not there are no more of the slot timings in the predetermined range subject to processing in ST902 (that is T32 through T35). That is to say, it is determined whether or not the result after paths in the predetermined range subject to processing in ST902 have been sequentially excluded in ST207 is 0, and processing in ST205 through ST208 is repeated until the result is 0.

If the result of the determination in ST903 is that none of the slot timings T32 through T35 subject to processing in ST902 remains, after determination in ST209 the processing flow returns to ST902 again. The timing specification section 802 then refers to the timing table again and selects the highest correlation value after excluding the correlation values corresponding to T32, T33, T34, and T35, (that is, C3), and then selects timings within a ±3 chip time range centered on timing T7 corresponding to C3. Here, therefore, T7 and T8 are selected.

Then the timing specification section 802 controls the storage section 803 so that receive data in a 1 symbol + 6 chip time range with timing T4 (that is, the timing 3 chips before timing T7 corresponding to C3) as the origin is held temporarily. Thereafter, the same kind of processing is executed as described above.

Thus, in this embodiment, the amount of data temporarily held in the storage section is 1 symbol + 6 chips. This is in line with the minimum amount of data necessary for obtaining correlation values between slot. timings within a ±3 chip time (that is, 6 chip time) range and second search codes in order to reduce the capacity of the storage section (that is, the memory capacity) and the hardware scale. However, the range of data to be stored is not limited to a ±3 chip time range, and can be set as appropriate.

The present inventors have previously invented a storage-type radio receiving apparatus with the object of improving cell search performance, etc. In the same way as a synchronization acquisition apparatus according to this embodiment, this storage-type radio receiving apparatus temporarily holds receive data in memory, etc., and performs despreading processing repeatedly on the held data. This invention is described in Japanese Patent Application No. HEI 10-292545, entire content of which is expressly incorporated by reference herein.

Thus, according to a synchronization acquisition apparatus and synchronization acquisition method of this embodiment, after second-stage processing has been executed en bloc for slot timings in a predetermined range from among slot timings detected in the first stage, third-stage processing is executed repeatedly for a plurality of scrambling code groups identified in the second stage and a plurality of scrambling code timings detected in the second stage, thereby enabling cell searching to be performed at higher speed than in the case of Embodiment 1.

(Embodiment 6)

A synchronization acquisition apparatus according to this embodiment has almost the same configuration as a synchronization acquisition apparatus according to Embodiment 5, but differs from Embodiment 5 in that slot timings for which second-stage processing is executed en bloc are not selected according to the size of the correlation values, but are selected in timing order.

In a synchronization acquisition apparatus according to this embodiment, only the operation of the timing table creation section 801 and timing specification section 802 differs from that in Embodiment 5, and therefore this embodiment will be described using the block diagram in FIG.11 once again.

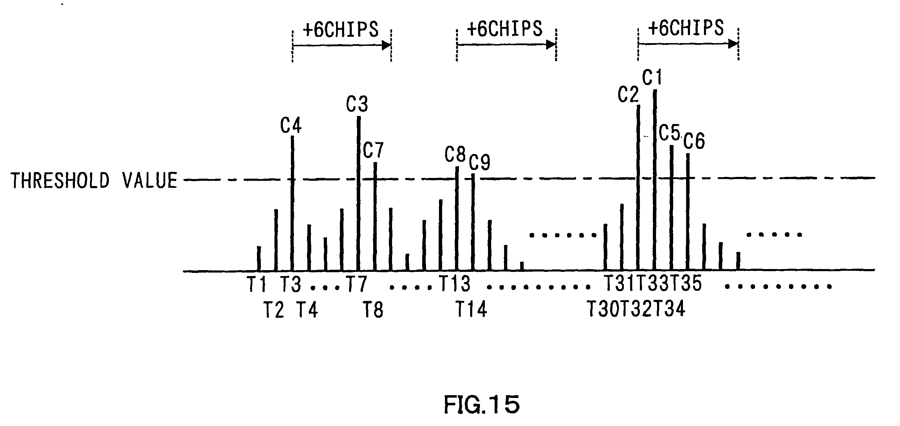

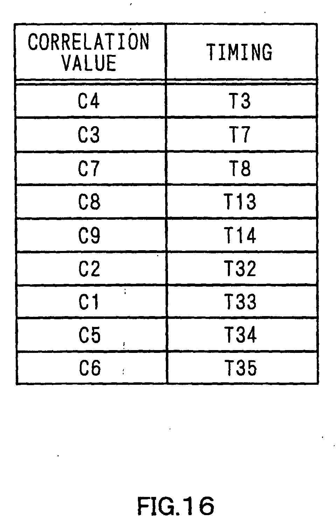

The timing table creation section 801 creates a timing table. If, as shown in FIG.15, the correlation values equal to or greater than the predetermined threshold value in the first stage are C1 through C9, as in Embodiment 5, and the plurality of timings T3, T7, T8, T13, T14, T32, T33, T34, and T35 are detected as slot timings, the timing table creation section 801 creates a timing table such as that shown in FIG.16. That is to say, the timing table creation section 801 creates a timing table with the plurality of timings detected in the first stage arranged in order of the elapse of time.

Next, the timing specification section 802 refers to the timing table and selects the earliest timing (that is, T3), and then selects timings within a predetermined time range (here, a +6 chip time) with T3 as the origin. That is to say, the timing specification section 802 selects timings within a 6 chip time range, in the same way as the timing specification section in Embodiment 5. Here, therefore, T3, T7, and T8 are selected. Then the timing specification section 802 controls the storage section 803 so that receive data in a 1 symbol + 6 chip time range with timing T4 as the origin is held temporarily.

Next, the timing specification section 802 instructs the storage section 803 to output the temporarily held data to the correlation circuit 804, and also first outputs a signal indicating timing T3 to the correlation circuit 804.

Comparing FIG.13 showing the operation in Embodiment 5 and FIG.15 showing the operation in this embodiment, the timing range for which second-stage processing is executed en bloc is the same 6 chip time range in both cases, but whereas second-stage processing is executed four times in Embodiment 5, it is executed only three times in this embodiment.

Thus, according to a synchronization acquisition apparatus and synchronization acquisition method of this embodiment, slot timings for which second-stage processing is executed en bloc are not selected according to the size of the correlation values, but are selected in timing order, thereby enabling cell searching to be performed at higher speed than in the case of Embodiment 5.

(Embodiment 7)

A synchronization acquisition apparatus according to this embodiment has almost the same configuration as a synchronization acquisition apparatus according to Embodiment 1, but differs from Embodiment 1 in that scrambling code group identification, scrambling code timing detection, and scrambling code identification are performed using in-phase-added correlation values.

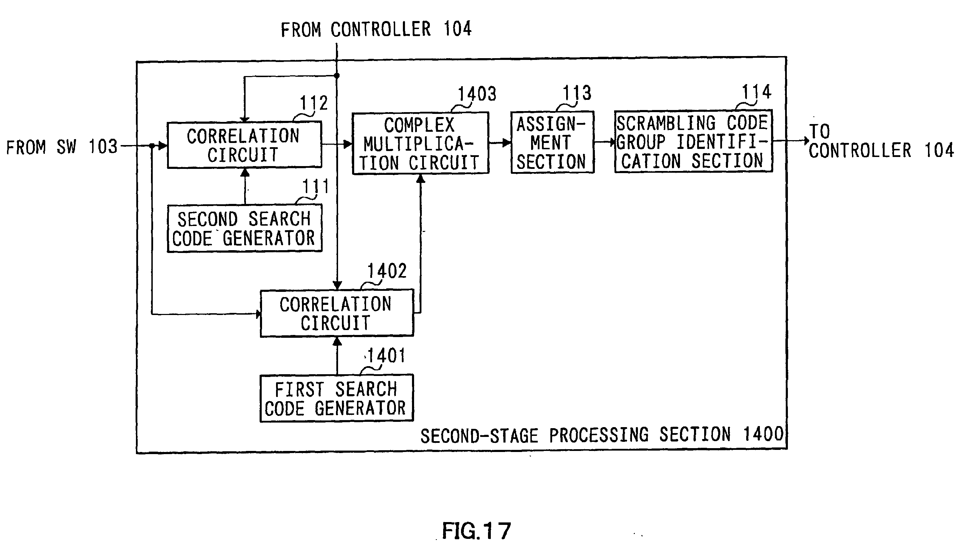

FIG.17 is a main block diagram showing a schematic configuration of the second-stage processing section of a synchronization acquisition apparatus according to Embodiment 7 of the present invention. Parts in FIG.17 identical to those in Embodiment 1 are assigned the same codes as in Embodiment 1 and their detailed explanations are omitted.

In a first-stage processing section 1400, a first search code generator 1401 generates a first search code. A correlation circuit 1402 calculates a correlation value between receive data and a first search code. A complex multiplication circuit 1403 multiplies the I component and Q component of the correlation value between receive data and the first search code (hereinafter referred to as "first correlation value") by the I component and Q component of the correlation value between receive data and the second search code (hereinafter referred to as "second correlation value"), respectively, and then adds the results.

Next, the operation of a synchronization acquisition apparatus with the above configuration will be described. A first correlation value calculated by correlation circuit 1402 and a second correlation value calculated by correlation circuit 112 are output to the complex multiplication circuit 1403.

In the complex multiplication circuit 1403, the I component of the first correlation value and the I component of the second correlation value are multiplied, and the Q component of the first correlation value and the Q component of the second correlation value are multiplied, and then the multiplied signals are added. That is to say, the following operation is performed in the complex multiplication circuit 1403:

$$\text{(I component of first correlation value} \times \text{I component}$$

$$\text{of second correlation value)} + \text{(Q component of first}$$

$$\text{correlation value} \times \text{Q component of second correlation}$$

$$\text{value)}$$

As a result of this operation, phase error of the second correlation value is compensated for, and the phases of the second correlation values computed for each slot become in-phase. Phase error compensated second correlation values are output to an assignment section 113.

In the assignment section 113, phase error compensated second correlation values are assigned to slots 0 through 15 in accordance with the second search code arrangement table shown in FIG.1 and are averaged sequentially for each of slots 0 through 15. That is to say, in the assignment section 113 second correlation values undergo in-phase addition on a slot-by-slot basis.

It is also possible to average correlation values that have undergone in-phase addition a plurality of times in third-stage processing. That is, averaging circuit 118 in the third-stage processing section 115 shown in FIG.4 can average the result of a plurality of in-phase additions of correlation values output from correlation circuit 117. However, as it is possible for correlation values with scrambling codes to be averaged on a symbol-by-symbol basis, and the intersymbol phase difference is very small, compensation of phase error by first correlation values as performed in the second stage is not necessary.

In order to further increase the precision of scrambling code identification, in-phase addition may be performed after compensation of phase error by first correlation values in third-stage processing also.

The present inventors have previously created an invention whereby the number of signals subjected to in-phase addition is varied adaptively according to the size of the phase difference between signals after in-phase addition, with the object of always creating an optimum delay profile without using a frequency estimation circuit even when frequency error occurs in received signals. This invention is described in Japanese Patent Application No.2000-160155, entire content of which is expressly incorporated by reference herein. As in this invention, in in-phase addition processing executed by the third-stage processing section of a synchronization acquisition apparatus according to this embodiment of the present invention, the number of correlation values subjected to in-phase addition can be varied adaptively according to the size of the phase difference between correlation values after in-phase addition.

Also, the present inventors have previously created an invention whereby a signal that has a first signal that contains symbol +A only and is transmitted via a propagation path that has a first propagation coefficient and a second signal that contains symbol +A and symbol -A and is transmitted via a propagation path that has a second propagation coefficient is received, the signals indicated by the first propagation coefficient are in-phase-added, and the signals indicated by the second propagation coefficient are in-phase-added, with the. object of obtaining diversity gain even when in-phase addition is performed on a diversity-transmitted pilot channel signal. This invention is described in Japanese Patent Application No.2000-131672, entire content of which is expressly incorporated by reference herein. Symbol -A means post-modulation symbol A transmitted after sign inversion, and symbol +A means post-modulation symbol A transmitted as it is without sign inversion.

As in this invention, in in-phase addition processing executed by the third-stage processing section of a synchronization acquisition apparatus according to this embodiment of the present invention, it is also possible to perform in-phase addition of third correlation values calculated from a signal indicated by a first propagation coefficient, perform in-phase addition of third correlation values calculated from a signal indicated by a second propagation coefficient, and then square these post-in-phase-addition correlation values and add the results. By this means it is possible to obtain diversity gain while performing in-phase addition for correlation values, and so improve cell search performance.

Thus, according to a synchronization acquisition apparatus and synchronization acquisition method of this embodiment, it is possible to suppress noise components by performing scrambling code group identification, scrambling code timing detection, and scrambling code identification using in-phase-added correlation values, thereby enabling identification and detection precision to be further increased.

(Embodiment 8)

When complex multiplications of first correlation values and second correlation values are performed as in a second-stage processing section according to Embodiment 7, the number of bits of a correlation value after complex multiplication increases, and therefore the capacity of memory needed in the assignment section (memory necessary for performing sequential averaging for slots 0 through 15 while correlation values after complex multiplication are being assigned to slots 0 through 15 in accordance with the second search code arrangement table) also increases, and so does the amount of computation required for averaging of correlation values after complex multiplication.

Thus, this embodiment differs from Embodiment 7 in that the number of bits of a correlation value after complex multiplication and the number of bits of memory for averaging provided in the assignment section are compared, and the correlation value after complex multiplication is bit-shifted so that the number of bits of the correlation value after complex multiplication can be accommodated by the number of bits of memory for averaging, before averaging is performed. That is to say, in this embodiment, before correlation values after complex multiplication are assigned to slots in accordance with the second search code arrangement table, the number of correlation value bits after averaging is estimated and the correlation values after complex multiplication undergo bit-shifting.

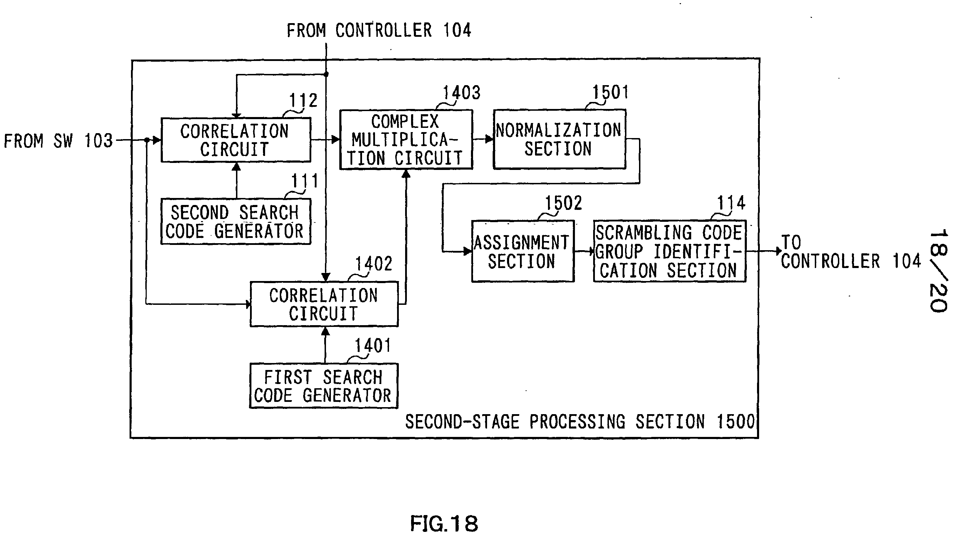

FIG.18 is a main block diagram showing a schematic configuration of the second-stage processing section of a synchronization acquisition apparatus according to Embodiment 8 of the present invention. Parts in FIG.18 identical to those in Embodiment 7 are assigned the same codes as in Embodiment' 7 and their detailed explanations are omitted.

In a second-stage processing section 1500, a normalization section 1501 bit-shifts a correlation value after complex multiplication by so-called block floating processing. That is to say, the normalization section 1501 performs normalization by means of so-called block floating on a correlation value after complex multiplication. The number of bits shifted at this time is as explained below. In the following description, an example is considered in which the number of bits of memory for averaging provided in the assignment section is 8.

The normalization section 1501 first selects the correlation value with the largest number of bits (that is, the correlation value with the highest value) from among the correlation values after complex multiplication calculated for second search codes 1 through 17. Then the normalization section 1501 compares the number of bits of that highest value with the number of bits of memory for averaging, and performs a right bit-shift of that highest value.

To be specific, assuming that the number of bits of the highest value among the correlation values after the first complex multiplication for second search codes 1 through 17 is 10, the normalization section 1501 shifts that 10-bit value 2 bits to the right to give 8 bits, thereby preventing overflow when averaging processing is carried out. The resulting 8-bit correlation value is output to the assignment section 1502.

Next, assuming that the number of bits of the highest value among the correlation values after the second complex multiplication for second search codes 1 through 17 is 12, the normalization section 1501 shifts that 12-bit value 4 bits to the right to give 8 bits, thereby preventing overflow when averaging processing is carried out. The resulting 8-bit correlation value is output to the assignment section 1502.

When averaging of correlation values after the first complex multiplication and correlation values after the second complex multiplication is carried out, the assignment section 1502 further shifts correlation values after the first complex multiplication 2 bits to the right to align the radix point positions of the correlation values after the respective complex multiplications before averaging the values.

Thus, according to a synchronization acquisition apparatus and synchronization acquisition method of this embodiment, normalization is performed by means of so-called block floating on correlation values after complex multiplication, and averaging is performed while aligning the radix point positions of correlation values after normalization, thereby making it possible to reduce the memory capacity required in the assignment section and the amount of computation needed for averaging of correlation values after complex multiplication.

(Embodiment 9)

A mobile station is notified by the base station with which it is currently communicating of the scrambling code, scrambling code timing, and scrambling code timing error (hereinafter referred to as "timing error") for another base station.

Thus, a synchronization acquisition apparatus according to this embodiment differs from Embodiment 1 in that when timing error reported by a base station is less than a predetermined threshold value, a correlation value with a scrambling code reported by the base station is calculated using a window width equivalent to that timing error, and when timing error reported by a base station is greater than or equal to the predetermined threshold value, cell searching is performed using the above-described conventional method.

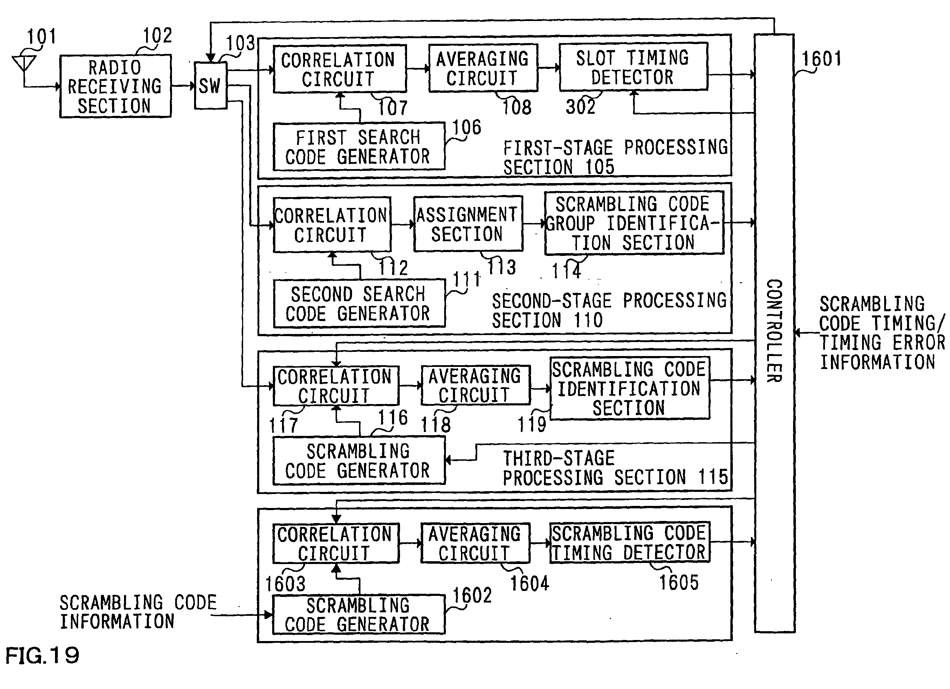

FIG.19 is a main block diagram showing a schematic configuration of a synchronization acquisition apparatus according to Embodiment 9 of the present invention. Parts in FIG.19 identical to those in Embodiment 2 are assigned the same codes as in Embodiment 2 and their detailed explanations are omitted.

In FIG.19, when timing error is less than a predetermined threshold value, a controller 1601 switches a switch 103 so that a radio receiving section 102 and correlation circuit 1603 are connected. When timing error is greater than or equal to the predetermined threshold value, the controller 1601 switches the switch 103 so that second-stage and third-stage processing is executed once for one execution of first-stage processing.

A scrambling code generator 1602 generates a scrambling code specified from scrambling code information sent from a base station. Correlation circuit 1603 calculates a correlation value between receive data and the scrambling code using a window width equivalent to the timing error. An averaging circuit 1604 averages correlation values a plurality of times. A scrambling code timing detector 1605 detects scrambling code timing.

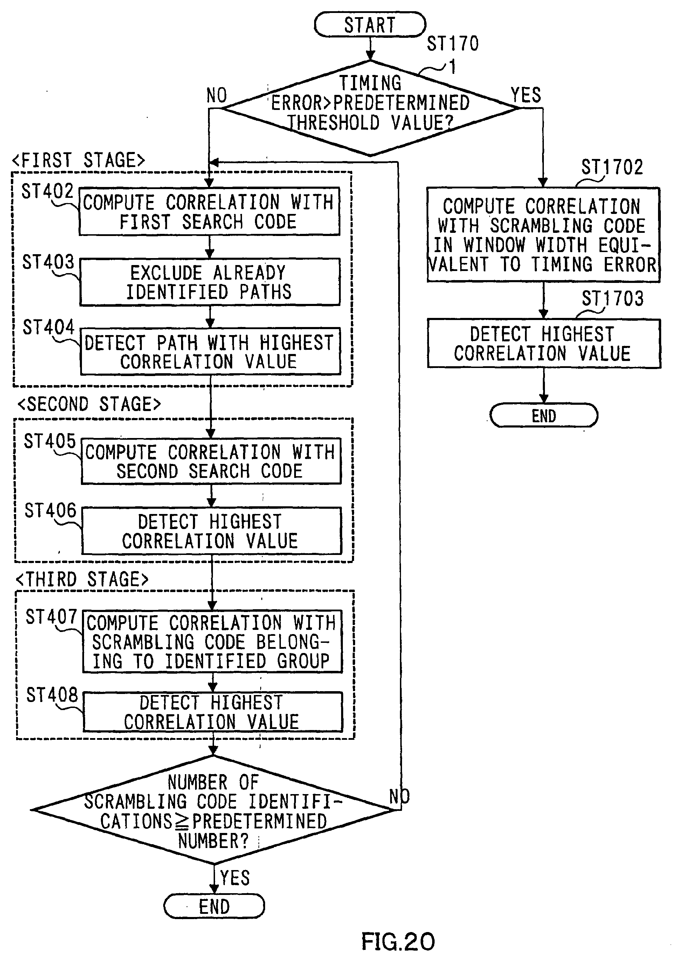

Next, the operation of a synchronization acquisition apparatus with the above configuration will be described. FIG.20 is a flowchart for explaining the operation of a synchronization acquisition apparatus according to Embodiment 9 of the present invention. Steps in FIG.20 in which the operation is identical to that in Embodiment 2 are assigned the same codes as in Embodiment 2 and their detailed explanations are omitted.

In the operation flowchart shown in FIG.20, in ST1701 the controller 1601 compares a timing error value reported from the base station with a predetermined threshold value. If the timing error is equal to or greater than the predetermined threshold value, the processing flow proceeds to ST402, and if the timing error is less than the predetermined threshold value, the processing flow proceeds to ST1702.

Also, if the timing error is less than the predetermined threshold value, the controller 1601 connects the radio receiving section 102 and correlation circuit 1603, and also outputs a signal to correlation circuit 1603 indicating the scrambling code timing and timing error reported by the base station.

In ST1702 the scrambling code generator 1602 generates a scrambling code specified from scrambling code information sent from the base station. Correlation circuit 1603 then calculates a correlation value between receive data and the scrambling code using a window width equivalent to the timing error.

To be specific, if, for example, the timing error is a 40 chip time, correlation circuit 1603 calculates a correlation value between the receive data and scrambling code for all timings within a ±40 chip range centering on the scrambling code timing indicated by the controller 1601. Then these correlation values are averaged a plurality of times by averaging circuit 1604. The method of setting the range of the window width shown here is just one example, and this embodiment is not limited to this.

Next, in ST1703, the scrambling code timing detector 1605 detects scrambling code timing by detecting the maximum value of the averaged correlation values.

Thus, according to a synchronization acquisition apparatus and synchronization acquisition method of this embodiment, when timing error reported by a base station is less than a predetermined threshold value, a correlation value with a scrambling code reported by the base station is calculated using a window width equivalent to that timing error, and when timing error reported by a base station is greater than or equal to the predetermined threshold value, cell searching is performed using the above-described conventional method, so that cell searching can be performed using the optimum method according to the size of timing error. Thus, according to a synchronization acquisition apparatus and synchronization acquisition method of this embodiment, it is possible for scrambling code identification to be performed with high precision even when timing error is comparatively large, and it is also possible to perform scrambling code timing identification at high speed and with high precision when timing error is comparatively small.

It is also possible for the present invention to be implemented by combining Embodiments 1 through 9 as appropriate.

Also, in the above descriptions, the number of slots contained in one frame has been assumed to be 16 (slots 0 through 15), but there is no particular limitation on the number of slots contained in one frame. For example, the number of these slots may be 15.

Moreover, in the above descriptions, the number of scrambling code groups has been assumed to be 32, and the number of scrambling codes belonging to each scrambling code group has been assumed to be 16, but there are no particular limitations on these numbers. For example, the number of scrambling code groups may be 64, and the number of scrambling codes belonging to each scrambling code group may be 8.

As described above, according to the present invention it is possible to identify scrambling codes of a plurality of paths with high efficiency and to perform faster cell searching than heretofore.

This application is based on Japanese Patent Application No.2000-177642 filed on June 13, 2000, entire content of which is expressly incorporated by reference herein.

Industrial Applicability

The present invention is applicable to a communication terminal apparatus and base station apparatus used in a mobile communication system. When the present invention is so applied, cell searching can be performed at high speed and with high precision in a communication terminal apparatus and base station apparatus.

**Claims**

1. A synchronization acquisition apparatus comprising:

   a first processing unit that performs first processing that detects a plurality of slot timings corresponding to a plurality of first correlation values equal to or greater than a predetermined threshold value among first correlation values between both receive data and a first search code;
   a second processing unit that performs second processing that detects scrambling code timing and a scrambling code group from a maximum second correlation value among second correlation values between both receive data and a second search code calculated in accordance with one of the slot timings; and
   a third processing unit that performs third processing that identifies a scrambling code from a maximum third correlation value among third correlation values between both receive data and a scrambling code belonging to said scrambling code group, which is calculated in accordance with said scrambling code timing;
   said synchronization acquisition apparatus performing said second processing and said third processing for said plurality of slot timings as executed in one of said first processing.

2. The synchronization acquisition apparatus according to claim 1, wherein said second processing unit calculates a second correlation value in accordance with timing in a predetermined range using an origin as slot timing detected by said first processing unit when frequency error of receive data is equal to or greater than a predetermined threshold value, and calculates a second correlation value in accordance with only slot timing detected by said first processing unit when receive data frequency error is less than said predetermined threshold value.

3. The synchronization acquisition apparatus according to claim 2, wherein said second processing unit adds all second correlation values calculated in accordance with timings in a predetermined range.

4. The synchronization acquisition apparatus according to claim 1, wherein said third processing unit calculates a third correlation value in accordance with timing in a predetermined range with scrambling code timing detected by said second processing unit as an origin when receive data frequency error is equal to or greater than a predetermined threshold value, and calculates a third correlation value in accordance with only scrambling code timing detected by said second processing unit when receive data frequency error is less than said predetermined threshold value.

5. The synchronization acquisition apparatus according to claim 4, wherein said second processing unit adds all third correlation values calculated in accordance with timings in a predetermined range.

6. The synchronization acquisition apparatus according to claim 1, wherein said second processing unit sequentially selects slot timings in a predetermined range based on the size of a first correlation value, and calculates a second correlation value using temporarily held identical receive data for slot timings in said predetermined range.

7. The synchronization acquisition apparatus according to claim 1, wherein said second processing unit sequentially selects slot timings in a predetermined range based on timing order, and calculates a second correlation value using temporarily held identical receive data for slot timings in said predetermined range.

8. The synchronization acquisition apparatus according to claim 1, wherein said second processing unit compensates for phase error by multiplying a first correlation value and then performs second processing using a second correlation value resulting from a plurality of in-phase additions.

9. The synchronization acquisition apparatus according to claim 8, wherein said second processing unit accommodates a number of bits of a second correlation value compensated for phase error in a number of bits of an area necessary for averaging processing of said second correlation values and then performs in-phase addition of said second correlation values a plurality of times.

10. The synchronization acquisition apparatus according to claim 1, wherein said third processing unit performs third processing using a third correlation value resulting from a plurality of in-phase additions.

11. The synchronization acquisition apparatus according to claim 10, wherein said third processing unit determines a number of third correlation values to be subjected to in-phase addition next time based on a value calculated from a current third correlation value after in-phase addition and a previous third correlation value after in-phase addition.

12. The synchronization acquisition apparatus according to claim 10, said synchronization acquisition apparatus performing third processing using a signal that has a first signal that contains only a +A symbol that is not sign-inverted and is transmitted via a propagation path that has a first propagation coefficient and a second signal that contains a +A symbol that is not sign-inverted and a -A symbol that is sign-inverted and is transmitted via a propagation path that has a second propagation coefficient;
wherein said third processing unit performs in-phase addition of third correlation values calculated from a signal indicated by said first propagation coefficient, and performs in-phase addition of third correlation values calculated from a signal indicated by said second propagation coefficient.

13. A synchronization acquisition apparatus comprising:

a first cell search unit that detects one slot timing corresponding to a maximum first correlation value among first correlation values between both receive data and a first search code, detects scrambling code timing and a scrambling code group from a maximum second correlation value among second correlation values between both receive data and a second search code, which is calculated in accordance with said slot timing, and detects a scrambling code from a maximum third correlation value among third correlation values between both receive data and a scrambling code belonging to said scrambling code group, which is calculated in accordance with said scrambling code timing;

a second cell search unit that performs first processing that detects a plurality of slot timings corresponding to a plurality of first correlation values equal to or greater than a predetermined threshold value among first correlation values between both receive data and a first search code, performs second processing that detects scrambling code timing and a scrambling code group from a maximum second correlation value among second correlation values between both receive data and a second search code, which is calculated in accordance with one of the slot timings, performs third processing that identifies a maximum third correlation value among third correlation values between both receive data and a scrambling code belonging to said scrambling code group, which is calculated in accordance with said scrambling code timing, and performs said second processing and said third processing for said plurality of slot timings as executed in one of said first processing; and
a first controller that performs control that uses said first cell search unit when receive data frequency error is equal to or greater than a predetermined threshold value, and uses said second cell search unit when receive data frequency error is less than said predetermined threshold value.

**14.** A synchronization acquisition apparatus comprising:

a first cell search unit that detects one slot timing corresponding to a maximum first correlation value among first correlation values between both receive data and a first search code, detects scrambling code timing and a scrambling code group from a maximum second correlation value among second correlation values between both receive data and a second search code, which is calculated in accordance with said slot timing, and detects a scrambling code from a maximum third correlation value among third correlation values between both receive data and a scrambling code belonging to said scrambling code group, which is calculated in accordance with said scrambling code timing;
a third cell search unit that calculates a correlation value between both receive data and a scrambling code reported from a communicating party in accordance with timing in a range equivalent to error of scrambling code timing reported by said communicating party with said scrambling code timing reported by said communicating party as an origin, and detects scrambling code timing; and
a second controller that performs control that uses said first cell search unit when said error is equal to or greater than a predetermined threshold value, and uses said third cell search unit when said error is less than said predetermined threshold value.

**15.** A communication terminal apparatus equipped with a synchronization acquisition apparatus, said synchronization acquisition apparatus comprising:

a first processing unit that performs first processing that detects a plurality of slot timings corresponding to a plurality of first correlation values equal to or greater than a predetermined threshold value among first correlation values between both receive data and a first search code;
a second processing unit that performs second processing that detects scrambling code timing and a scrambling code group from a maximum second correlation value among second correlation values between both receive data and a second search code, which is calculated in accordance with one of the slot timings; and
a third processing unit that performs third processing that identifies a scrambling code from a maximum third correlation value among third correlation values between both receive data and a scrambling code belonging to said scrambling code group, which is calculated in accordance with said scrambling code timing;
said synchronization acquisition apparatus performing said second processing and said third processing for said plurality of slot timings as executed in one execution of said first processing.

**16.** A communication terminal apparatus equipped with a synchronization acquisition apparatus, said synchronization acquisition apparatus comprising:

a first cell search unit that detects one slot timing corresponding to a maximum first correlation value among first correlation values between both receive data and a first search code, detects scrambling code timing and a scrambling code group from a maximum second correlation value among second correlation values between receive data and a second search code, which is calculated in accordance with said slot timing, and detects a scrambling code from a maximum third correlation value among third correlation values between both receive data and a scrambling code belonging to said scrambling code group, which is calculated in accordance with said scrambling code timing;
a second cell search unit that performs first processing that detects a plurality of slot timings corresponding to a plurality of first correlation values equal to or greater than a predetermined threshold value among first correlation values between both receive data and a first search code, performs second processing that detects scrambling code timing and a scrambling code group from a maximum second correlation value among second correlation values between both receive data and a second search code calculated in accordance with one of the slot timings, performs third processing that identifies a maximum third correlation value among third correlation values between both receive data and a scrambling code belonging to said scrambling code group, which is calculated in accordance with said scrambling code timing, and performs said second processing and said third processing for said plurality of slot timings as executed in one of said first processing; and

a first controller that performs control that uses said first cell search unit when receive data frequency error is equal to or greater than a predetermined threshold value, and uses said second cell search unit when receive data frequency error is less than said predetermined threshold value.

17. A communication terminal apparatus equipped with a synchronization acquisition apparatus, said synchronization acquisition apparatus comprising:

a first cell search unit that detects one slot timing corresponding to a maximum first correlation value among first correlation values between both receive data and a first search code, detects scrambling code timing and a scrambling code group from a maximum second correlation value among second correlation values between both receive data and a second search code, which is calculated in accordance with said slot timing, and detects a scrambling code from a maximum third correlation value among third correlation values between both receive data and a scrambling code belonging to said scrambling code group, which is calculated in accordance with said scrambling code timing;

a third cell search unit that calculates a correlation value between both receive data and a scrambling code reported from a communicating party in accordance with timing in a range equivalent to error of scrambling code timing reported by said communicating party with said scrambling code timing reported by said communicating party as an origin, and detects scrambling code timing; and

a second controller that performs control that uses said first cell search unit when said error is equal to or greater than a predetermined threshold value, and uses said third cell search unit when said error is less than said predetermined threshold value.

18. A base station apparatus equipped with a synchronization acquisition apparatus, said synchronization acquisition apparatus comprising:

a first processing unit that performs first processing that detects a plurality of slot timings corresponding to a plurality of first correlation values equal to or greater than a predetermined threshold value. among first correlation values between both receive data and a first search code;

a second processing unit that performs second processing that detects scrambling code timing and a scrambling code group from a maximum second correlation value among second correlation values between receive data and a second search code, which is calculated in accordance with one of the slot timings; and

a third processing unit that performs third processing that identifies a scrambling code from a maximum third correlation value among third correlation values between both receive data and a scrambling code belonging to said scrambling code group, which is calculated in accordance with said scrambling code timing;

said synchronization acquisition apparatus performing said second processing and said third processing for said plurality of slot timings as executed in one of said first processing.

19. A base station apparatus equipped with a synchronization acquisition apparatus, said synchronization acquisition apparatus comprising:

a first cell search unit that detects one slot timing corresponding to a maximum first correlation value among first correlation values between both receive data and a first search code, detects scrambling code timing and a scrambling code group from a maximum second correlation value among second correlation values between both receive data and a second search code, which is calculated in accordance with said slot timing, and detects a scrambling code from a maximum third correlation value among third correlation values between both receive data and a scrambling code belonging to said scrambling code group, which is calculated in accordance with said scrambling code timing;

a second cell search unit that performs first processing that detects a plurality of slot timings corresponding to a plurality of first correlation values equal to or greater than a predetermined threshold value among first correlation values between both receive data and a first search code, performs second processing that detects scrambling code timing and a scrambling code group from a maximum second correlation value among second correlation values between both receive data and a second search code, which is calculated in accordance with one of the slot timings, performs third processing that identifies a maximum third correlation value among third correlation values between both receive data and a scrambling code belonging to said scrambling code group, which is calculated in accordance with said scrambling code timing, and performs said second processing and said third processing for said plurality of slot timings as executed in one of said first processing; and a first controller that performs control that uses said first cell search unit when receive data frequency error is equal to or greater than a predetermined threshold value, and uses said second cell search unit when receive data frequency error is less than said predetermined threshold value.

20. A base station apparatus equipped with a synchronization acquisition apparatus, said synchronization acquisition apparatus comprising:

a first cell search unit that detects one slot timing corresponding to a maximum first correlation value among first correlation values between receive data and a first search code, detects scrambling code timing and a scrambling code group from a maximum second correlation value among second correlation values between both receive data and a second search code, which is calculated in accordance with said slot timing, and detects a scrambling code from a maximum third correlation value among third correlation values between both receive data and a scrambling code belonging to said scrambling code group, which is calculated in accordance with said scrambling code timing;

a third cell search unit that calculates a correlation value between both receive data and a scrambling code reported from a communicating party in accordance with timing in a range equivalent to error of scrambling code timing reported by said communicating party with said scrambling code timing reported by said communicating party as an origin, and detects scrambling code timing; and

a second controller that performs control that uses said first cell search unit when said error is equal to or greater than a predetermined threshold value, and uses said third cell search unit when said error is less than said predetermined threshold value.

21. A synchronization acquisition method comprising:

a first processing step of performing first processing that detects a plurality of slot timings corresponding to a plurality of first correlation values equal to or greater than a predetermined threshold value among first correlation values between both receive data and a first search code;

a second processing step of performing second processing that detects scrambling code timing and a scrambling code group from a maximum second correlation value among second correlation values between both receive data and a second search code, which is calculated in accordance with one of the slot timings; and

a third processing step of performing third processing that identifies a scrambling code from a maximum third correlation value among third correlation values between both receive data and a scrambling code belonging to said scrambling code group, which is calculated in accordance with said scrambling code timing;

said synchronization acquisition method performing said second processing and said third processing for said plurality of slot timings as executed in one of said first processing.

22. A synchronization acquisition method comprising:

a first cell search step of detecting one slot timing corresponding to a maximum first correlation value among first correlation values between both receive data and a first search code, detecting scrambling code timing and a scrambling code group from a maximum second correlation value among second correlation values between both receive data and a second search code, which is calculated in accordance with said slot timing, and detecting a scrambling code from a maximum third correlation value among third correlation values between both receive data and a scrambling code belonging to said scrambling code group, which is calculated in accordance with said scrambling code timing; and

a second cell search step of performing first processing that detects a plurality of slot timings corresponding to a plurality of first correlation values equal to or greater than a predetermined threshold value among first correlation values between both receive data and a first search code, performing second processing that detects scrambling code timing and a scrambling code group from a maximum second correlation value among second correlation values between both receive data and a second search code, which is calculated in accordance with one of the slot timings, performing third processing that identifies a maximum third correlation value among third correlation values between both receive data and a scrambling code belonging to said scrambling code group, which is calculated in accordance with said scrambling code timing, and performing said second processing and said third processing for said plurality of slot timings as executed in one of said first processing;

wherein said first cell search step is used when receive data frequency error is equal to or greater than a predetermined threshold value, and said second cell search step is used when receive data frequency error is less than said predetermined threshold value.

**23.** A synchronization acquisition method comprising:

a first cell search step of detecting one slot timing corresponding to a maximum first correlation value among first correlation values between both receive data and a first search code, detecting scrambling code timing and a scrambling code group from a maximum second correlation value among second correlation values between both receive data and a second search code, which is calculated in accordance with said slot timing, and detecting a scrambling code from a maximum third correlation value among third correlation values between both receive data and a scrambling code belonging to said scrambling code group, which is calculated in accordance with said scrambling code timing; and
a third cell search step of calculating a correlation value between both receive data and a scrambling code reported from a communicating party in accordance with timing in a range equivalent to error of scrambling code timing reported by said communicating party with said scrambling code timing reported by said communicating party as an origin, and detecting scrambling code timing;

wherein said first cell search step is used when said error is equal to or greater than a predetermined threshold value, and said third cell search step is used when said error is less than said predetermined threshold value.

| GROUP No. | | SLOT No. 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| 1 | : | 1 | 1 | 2 | 11 | 6 | 3 | 15 | 7 | 8 | 8 | 7 | 15 | 3 | 6 | 11 | 2 |
| 2 | : | 1 | 2 | 9 | 3 | 10 | 11 | 13 | 13 | 11 | 10 | 3 | 9 | 2 | 1 | 16 | 16 |
| 3 | : | 1 | 3 | 16 | 12 | 14 | 2 | 11 | 2 | 14 | 12 | 16 | 3 | 1 | 13 | 4 | 13 |
| 4 | : | 1 | 4 | 6 | 4 | 1 | 10 | 0 | 8 | 17 | 14 | 12 | 14 | 17 | 8 | 9 | 10 |
| 5 | : | 1 | 5 | 13 | 13 | 5 | 1 | 7 | 14 | 3 | 16 | 8 | 8 | 16 | 3 | 14 | 7 |
| 6 | : | 1 | 6 | 3 | 5 | 9 | 9 | 5 | 3 | 6 | 1 | 4 | 2 | 15 | 15 | 2 | 4 |
| 7 | : | 1 | 7 | 10 | 14 | 13 | 17 | 3 | 9 | 9 | 3 | 17 | 13 | 14 | 10 | 7 | 1 |
| 8 | : | 1 | 8 | 17 | 6 | 17 | 8 | 1 | 15 | 12 | 5 | 13 | 7 | 13 | 5 | 12 | 15 |
| 9 | : | 1 | 9 | 7 | 15 | 4 | 16 | 16 | 4 | 15 | 7 | 9 | 1 | 12 | 17 | 7 | 12 |
| 10 | : | 1 | 10 | 14 | 7 | 8 | 7 | 14 | 10 | 1 | 9 | 5 | 12 | 11 | 12 | 5 | 9 |
| 11 | : | 1 | 11 | 4 | 16 | 12 | 15 | 12 | 16 | 4 | 11 | 1 | 6 | 10 | 7 | 10 | 6 |
| 12 | : | 1 | 12 | 11 | 8 | 16 | 6 | 10 | 5 | 7 | 13 | 14 | 17 | 9 | 2 | 15 | 3 |
| 13 | : | 1 | 13 | 1 | 17 | 3 | 14 | 8 | 11 | 10 | 15 | 10 | 11 | 8 | 14 | 3 | 17 |
| 14 | : | 1 | 14 | 8 | 9 | 7 | 5 | 6 | 17 | 13 | 17 | 6 | 5 | 7 | 9 | 8 | 14 |
| 15 | : | 1 | 15 | 15 | 1 | 11 | 13 | 4 | 6 | 16 | 2 | 2 | 16 | 6 | 4 | 13 | 11 |
| 16 | : | 1 | 16 | 5 | 10 | 15 | 4 | 2 | 12 | 2 | 4 | 15 | 10 | 5 | 16 | 1 | 8 |
| 17 | : | 1 | 17 | 12 | 2 | 2 | 12 | 17 | 1 | 5 | 6 | 11 | 4 | 4 | 11 | 6 | 5 |
| 18 | : | 2 | 8 | 11 | 15 | 14 | 1 | 4 | 10 | 10 | 4 | 1 | 14 | 15 | 11 | 8 | 2 |
| 19 | : | 2 | 9 | 1 | 7 | 1 | 9 | 2 | 16 | 13 | 6 | 14 | 8 | 14 | 6 | 13 | 16 |
| 20 | : | 2 | 10 | 8 | 16 | 5 | 17 | 17 | 5 | 16 | 8 | 10 | 2 | 13 | 1 | 1 | 13 |
| 21 | : | 2 | 11 | 15 | 8 | 9 | 8 | 15 | 11 | 2 | 10 | 6 | 13 | 12 | 13 | 6 | 10 |
| 22 | : | 2 | 12 | 5 | 17 | 13 | 16 | 13 | 17 | 5 | 12 | 2 | 7 | 11 | 8 | 11 | 7 |
| 23 | : | 2 | 13 | 12 | 9 | 17 | 7 | 11 | 6 | 8 | 14 | 15 | 1 | 10 | 3 | 16 | 4 |
| 24 | : | 2 | 14 | 2 | 1 | 4 | 15 | 9 | 12 | 11 | 16 | 11 | 12 | 9 | 15 | 4 | 1 |
| 25 | : | 2 | 15 | 9 | 10 | 8 | 6 | 7 | 1 | 14 | 1 | 7 | 6 | 8 | 10 | 9 | 15 |
| 26 | : | 2 | 16 | 16 | 2 | 12 | 14 | 5 | 7 | 17 | 3 | 3 | 17 | 7 | 5 | 14 | 12 |
| 27 | : | 2 | 17 | 6 | 11 | 16 | 5 | 3 | 13 | 3 | 5 | 16 | 11 | 6 | 17 | 2 | 9 |
| 28 | : | 2 | 1 | 13 | 3 | 3 | 13 | 1 | 2 | 6 | 7 | 12 | 5 | 5 | 12 | 7 | 6 |
| 29 | : | 2 | 2 | 3 | 12 | 7 | 4 | 16 | 8 | 9 | 9 | 8 | 16 | 4 | 7 | 12 | 3 |
| 30 | : | 2 | 3 | 10 | 4 | 11 | 12 | 14 | 14 | 12 | 11 | 4 | 10 | 3 | 2 | 17 | 17 |
| 31 | : | 2 | 4 | 17 | 13 | 15 | 3 | 12 | 3 | 15 | 13 | 17 | 4 | 2 | 14 | 5 | 14 |
| 32 | : | 2 | 5 | 7 | 5 | 2 | 11 | 10 | 9 | 1 | 15 | 13 | 15 | 1 | 9 | 10 | 1 |

FIG.1

FIG.2

START

<FIRST STAGE>

ST11 — COMPUTE CORRELATION WITH FIRST SEARCH CODE

ST12 — EXCLUDE ALREADY IDENTIFIED PATHS

ST13 — DETECT PATH WITH HIGHEST CORRELATION VALUE

<SECOND STAGE>

ST14 — COMPUTE CORRELATION WITH SECOND SEARCH CODE

ST15 — DETECT HIGHEST CORRELATION VALUE

<THIRD STAGE>

ST16 — COMPUTE CORRELATION WITH SCRAMBLING CODE BELONGING TO IDENTIFIED GROUP

ST17 — DETECT HIGHEST CORRELATION VALUE

ST18 — NUMBER OF SCRAMBLING CODE IDENTIFICATIONS ≧ PREDETERMINED NUMBER?

NO

YES

END

FIG.3

FIG.4

START

<FIRST STAGE>

ST201 COMPUTE CORRELATION WITH FIRST SEARCH CODE

ST202 DETECT PATH WITH CORRELATION VALUE GREATER THAN OR EQUAL TO PREDETERMINED THRESHOLD VALUE

ST209 DETECTED PATHS ≦ 0?
NO          YES

<SECOND STAGE>

ST203 COMPUTE CORRELATION WITH SECOND SEARCH CODE

ST204 DETECT HIGHEST CORRELATION VALUE

<THIRD STAGE>

ST205 COMPUTE CORRELATION WITH SCRAMBLING CODE BELONGING TO IDENTIFIED GROUP

ST206 DETECT HIGHEST CORRELATION VALUE

ST207 EXCLUDE IDENTIFIED PATH

ST208 NUMBER OF SCRAMBLING CODE IDENTIFICATIONS ≧ PREDETERMINED NUMBER?
NO

YES

END

FIG.5

FIG.6

START

ST401 — FREQUENCY ERROR<PREDETERMINED THRESHOLD VALUE?

NO

YES

<FIRST STAGE>

COMPUTE CORRELATION WITH FIRST SEARCH CODE

ST402    ST403

EXCLUDE ALREADY IDENTIFIED PATHS

ST404

DETECT PATH WITH HIGHEST CORRELATION VALUE

<SECOND STAGE>

COMPUTE CORRELATION WITH SECOND SEARCH CODE

ST405    ST406

DETECT HIGHEST CORRELATION VALUE

<THIRD STAGE>

COMPUTE CORRELATION WITH SCRAMBLING CODE BELONGING TO IDENTIFIED GROUP

ST407    ST408

DETECT HIGHEST CORRELATION VALUE

ST409 — NUMBER OF SCRAMBLING CODE IDENTIFICATIONS≧PREDETERMINED NUMBER?

NO

YES

END

<FIRST STAGE>

ST201    ST202

ST209    YES

NO

<SECOND STAGE>

ST203

ST204

<THIRD STAGE>

ST205

ST206

ST207

ST208    NO

YES

END

FIG.7

26

FREQUENCY ERROR INFORMATION

FIG.8

EP 1 202 484 A1

FIG.9

FREQUENCY ERROR INFORMATION

601 SWITCHING CONTROLLER

FROM CONTROLLER 104

608

602 SW

FROM SW 103

117 CORRELATION CIRCUIT

118 AVERAGING CIRCUIT

116 SCRAMBLING CODE GENERATOR

FROM CONTROLLER 104

605 CORRELATION CIRCUIT

118 AVERAGING CIRCUIT

603 -X CHIPS

606 CORRELATION CIRCUIT

118 AVERAGING CIRCUIT

604 -X CHIPS

607 CORRELATION CIRCUIT

118 AVERAGING CIRCUIT

116 SCRAMBLING CODE GENERATOR

FROM CONTROLLER 104

SCRAMBLING CODE IDENTIFICATION SECTION

TO CONTROLLER 104

THIRD-STAGE PROCESSING SECTION 600

EP 1 202 484 A1

FREQUENCY ERROR INFORMATION

SECOND-STAGE PROCESSING SECTION 700

501 SWITCHING CONTROLLER

502 SW

FROM SW 103

FROM CONTROLLER 104

112 CORRELATION CIRCUIT

111 SECOND SEARCH CODE GENERATOR

503 -X CHIPS

504 -X CHIPS

FROM CONTROLLER 104

505 CORRELATION CIRCUIT

506 CORRELATION CIRCUIT

507 CORRELATION CIRCUIT

111 SECOND SEARCH CODE GENERATOR

701 Σ

113 ASSIGNMENT SECTION

113 ASSIGNMENT SECTION

114 SCRAMBLING CODE GROUP IDENTIFICATION SECTION

TO CONTROLLER 104

FIG.10

EP 1 202 484 A1

EP 1 202 484 A1

FROM CONTROLLER 104

801
TIMING TABLE CREATION SECTION

802
TIMING SPECIFICATION SECTION

803
STORAGE SECTION

FROM SW 103

804
CORRELATION CIRCUIT

111
SECOND SEARCH CODE GENERATOR

113
ASSIGNMENT SECTION

114
SCRAMBLING CODE GROUP IDENTIFI-CATION SECTION

TO CONTROLLER 104

SECOND-STAGE PROCESSING SECTION 800

FIG.11

<FIRST STAGE>

START

ST201 COMPUTE CORRELATION WITH FIRST SEARCH CODE

ST202 DETECT PATH WITH CORRELATION VALUE GREATER THAN OR EQUAL TO PREDETERMINED THRESHOLD VALUE

<SECOND STAGE>

ST901 TIMING TABLE CREATION

ST902 COMPUTE CORRELATION OF STORED RECEIVE DATA TO SECOND SEARCH CODE FOR PLURALITY OF TIMINGS

ST204 DETECT HIGHEST CORRELATION VALUE

ST209 DETECTED PATHS ≦ 0?   NO   YES

ST903 PATHS IN PREDETERMINED RANGE ≦ 0?   YES   NO

<THIRD STAGE>

ST205 COMPUTE CORRELATION WITH SCRAMBLING CODE BELONGING TO IDENTIFIED GROUP

ST206 DETECT HIGHEST CORRELATION VALUE

ST207 EXCLUDE IDENTIFIED PATH

ST208 NUMBER OF SCRAMBLING CODE IDENTIFICATIONS ≧ PREDETERMINED NUMBER?   NO

YES

END

FIG.12

FIG.13

EP 1 202 484 A1

| CORRELATION VALUE | TIMING |
|:---:|:---:|
| C1 | T33 |
| C2 | T32 |
| C3 | T7 |
| C4 | T3 |
| C5 | T34 |
| C6 | T35 |
| C7 | T8 |
| C8 | T13 |
| C9 | T14 |

FIG.14

EP 1 202 484 A1

FIG.15

| CORRELATION VALUE | TIMING |
|:---:|:---:|
| C4 | T3 |
| C3 | T7 |
| C7 | T8 |
| C8 | T13 |
| C9 | T14 |
| C2 | T32 |
| C1 | T33 |
| C5 | T34 |
| C6 | T35 |

## FIG.16

FROM CONTROLLER 104

FROM SW 103 → 

CORRELATION CIRCUIT ⌒112

SECOND SEARCH CODE GENERATOR ⌒111

COMPLEX MULTIPLICA-TION CIRCUIT ⌒1403

ASSIGN-MENT SECTION ⌒113

SCRAMBLING CODE GROUP IDENTIFI-CATION SECTION ⌒114

→ TO CONTROLLER 104

CORRELATION CIRCUIT ⌒1402

FIRST SEARCH CODE GENERATOR ⌒1401

SECOND-STAGE PROCESSING SECTION 1400

FIG.17

EP 1 202 484 A1

FROM SW 103 →

CORRELATION
CIRCUIT
_112_

SECOND SEARCH
CODE GENERATOR
_111_

COMPLEX
MULTIPLICA-
TION CIRCUIT
_1403_

NORMALIZATION
SECTION
_1501_

ASSIGNMENT
SECTION
_1502_

SCRAMBLING CODE
GROUP IDENTIFI-
CATION SECTION
_114_

→ TO
CONTROLLER 104

CORRELATION
CIRCUIT
_1402_

FIRST SEARCH
CODE GENERATOR
_1401_

SECOND-STAGE PROCESSING SECTION 1500

FIG.18

EP 1 202 484 A1

FIG.19

SCRAMBLING CODE TIMING/TIMING ERROR INFORMATION

CONTROLLER — 1601

RADIO RECEIVING SECTION — 102
101
SW — 103

**FIRST-STAGE PROCESSING SECTION 105**
CORRELATION CIRCUIT — 107
AVERAGING CIRCUIT — 108
SLOT TIMING DETECTOR — 302
FIRST SEARCH CODE GENERATOR — 106

**SECOND-STAGE PROCESSING SECTION 110**
CORRELATION CIRCUIT — 112
ASSIGNMENT SECTION — 113
SCRAMBLING CODE GROUP IDENTIFICATION SECTION — 114
SECOND SEARCH CODE GENERATOR — 111

**THIRD-STAGE PROCESSING SECTION 115**
CORRELATION CIRCUIT — 117
AVERAGING CIRCUIT — 118
SCRAMBLING CODE IDENTIFICATION SECTION — 119
SCRAMBLING CODE GENERATOR — 116

CORRELATION CIRCUIT — 1603
AVERAGING CIRCUIT — 1602
SCRAMBLING CODE TIMING DETECTOR — 1604
SCRAMBLING CODE GENERATOR — 1605

SCRAMBLING CODE INFORMATION

START

ST1701

TIMING
ERROR>PREDETERMINED
THRESHOLD VALUE?

NO

YES

<FIRST STAGE>

ST402 COMPUTE CORRELATION WITH
FIRST SEARCH CODE

ST403 EXCLUDE ALREADY
IDENTIFIED PATHS

ST404 DETECT PATH WITH HIGHEST
CORRELATION VALUE

<SECOND STAGE>

ST405 COMPUTE CORRELATION WITH
SECOND SEARCH CODE

ST406 DETECT HIGHEST
CORRELATION VALUE

<THIRD STAGE>

ST407 COMPUTE CORRELATION WITH
SCRAMBLING CODE BELONG-
ING TO IDENTIFIED GROUP

ST408 DETECT HIGHEST
CORRELATION VALUE

NUMBER OF
SCRAMBLING CODE IDENTIFI-
CATIONS≧PREDETERMINED
NUMBER?

NO

YES

END

ST1702 COMPUTE CORRELATION
WITH SCRAMBLING CODE
IN WINDOW WIDTH EQUI-
VALENT TO TIMING ERROR

ST1703 DETECT HIGHEST
CORRELATION VALUE

END

FIG.20

## INTERNATIONAL SEARCH REPORT

International application No.

PCT/JP01/05016

A. CLASSIFICATION OF SUBJECT MATTER
Int.Cl$^7$   H04J13/04, H04Q7/38

According to International Patent Classification (IPC) or to both national classification and IPC

B. FIELDS SEARCHED

Minimum documentation searched (classification system followed by classification symbols)
Int.Cl$^7$   H04B1/69-1/713, H04J13/00-13/06, H04Q7/38

Documentation searched other than minimum documentation to the extent that such documents are included in the fields searched
Jitsuyo Shinan Koho        1926-1996     Toroku Jitsuyo Shinan Koho  1994-2001
Kokai Jitsuyo Shinan Koho 1971-2001     Jitsuyo Shinan Toroku Koho  1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | Kenichi HIGUCHI, et al., "DS-CDMA 3 Dankai Kousoku Cell Search-hou ni okeru Path Diversity no Tekiyou Kouka", 1997 nen Denshi Joho Tsuushin Gakkai Tsuushin Society Taikai Kouen Ronbunsuu 1, 13 August, 1997 (13.08.97), page 254 | 1-23 |
| A | Kenichi HIGUCHI et al., "W-CDMA 3 Dankai Kousoku Cell Search-hou ni okeru Shuuhasu Drift Hoshou Tokusei", Denshi Joho Tsuushin Gakkai Gijutsu Kenkyu Houkoku, 23 July, 1999 (23.07.99), Vol.99, No.220, RCS99-65, pages 13 to 18 | 1-23 |
| A | JP 2000-138657 A (Matsushita Electric Industrial Co., Ltd.), 06 May, 2000 (06.05.00), page 2, column 2, line 32 to page 4, column 5, line 39; Figs. 11 to 13 & WO 00/13358 A1     & AU 9954431 A & EP 1028552 A1     & CN 127275 A | 1-23 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 August, 2001 (10.08.01) | 21 August, 2001 (21.08.01) |

| Name and mailing address of the ISA/ Japanese Patent Office | Authorized officer |
|---|---|
| Facsimile No. | Telephone No. |

Form PCT/ISA/210 (second sheet) (July 1992)

**INTERNATIONAL SEARCH REPORT**

International application No.

PCT/JP01/05016

C (Continuation).   DOCUMENTS CONSIDERED TO BE RELEVANT

| Category* | Citation of document, with indication, where appropriate, of the relevant passages | Relevant to claim No. |
|---|---|---|
| A | Motohiro TANNO et al., "W-CDMA 3 Dankai Cell Search ni okeru Dai 2 Stage Dousou Heikin Kouka", 2000 nen Denshi Joho Tsuushin Gakkai Sougou Taikai Kouen Ronbunshuu", Tsuushin 1, 07 March, 2000 (07.03.00), page 440 | 8 |
| A | JP 2000-138615 A (Matsushita Electric Ind. Co., Ltd.), 16 May, 2000 (16.05.00), Full text; all drawings (Family: none) | 1-23 |
| A | JP 11-88295 A (Matsushita Electric Ind. Co., Ltd.), 30 March, 1999 (30.03.99), Full text; Figs. 3, 6 & EP 892503 A2    & CN 1206267 A & KR 99013970 A | 1-23 |
| A | Kenichi HIGUCHI et al., "DS-CDMA Kichikyoku-kan Hi-douki Cellular ni okeru Long Code Mask wo mochiiru Kousoku Cell Search-hou", Denshi Joho Tsuushin Gakkai Gijutsu Kenkyuu Houkoku, Vol.96, No.481, RCS96-122, pages 57 to 63 | 1-23 |
| A | Kenichi HIGUCHI, Mamoru SAWASHI, Fumiyuki ADACHI, "Fast Cell Search Algorithm in Inter-Cell Asychronous DS-CDMA Mobile Radio", IEICE Trans. Commun., Vol.E81-B, No.7, 07 July, 1998 (07.07.98), pages 1527 to 1534 | 1-23 |
| P,A | JP 2001-145151 A (NEC Corporation), 25 May, 2001 (25.05.01), page 3, column 4, lines 28 to 36; page 4, column 5, line 36 to page 6, column 10, line 2; Fig. 1 (Family: none) | 1-23 |
| P,A | JP 2000-252875 A (Matsushita Electric Ind. Co., Ltd.), 14 September, 2000 (14.09.00), Full text; all drawings    (Family: none) | 1-23 |
| P,A | JP 2000-349739 A (Matsushita Electric Co., Ltd.), 15 December, 2000 (15.12.00), Full text; all drawings    (Family: none) | 1-23 |

Form PCT/ISA/210 (continuation of second sheet) (July 1992)